# FASCICULE DE BREVET EUROPEEN

(11) **EP 3 873 859 B1**
(45) Date de publication et mention de la délivrance du brevet: **01.05.2024**
(21) Numéro de dépôt: 19795206.2
(22) Date de dépôt: 29.10.2019
(51) Int. Cl.: C03C 6/02, C03C 1/02, C03B 1/02, C03C 3/091, C03C 3/087

(54) **PROCEDE DE FABRICATION DE VERRE ET INSTALLATION DE VERRERIE INDUSTRIELLE**
GLASHERSTELLUNGSVERFAHREN UND INDUSTRIELLE GLASHERSTELLUNGSANLAGE
GLASS PRODUCTION METHOD AND INDUSTRIAL GLASS-MAKING FACILITY

(30) Priorité: 29.10.2018 FR 1860020
(43) Date de publication de la demande: 08.09.2021
(73) Titulaire: Arc France, 62510 Arques (FR)
(72) Inventeur: CHARLES, Hervé, 62510 ARQUES (FR); DONZE, Sébastien, 62510 ARQUES (FR); IBLED, Xavier, 62510 ARQUES (FR); FAMCHON, François, 62510 ARQUES (FR); BONNINGUES, Jean-Marie, 62510 ARQUES (FR)
(74) Mandataire: Cabinet Netter
(86) Numéro de dépôt international: PCT/EP2019/079487
(87) Numéro de publication internationale: WO 2020/089206

(56) Documents cités:
- CN-A- 106 630 607
- CN-A- 107 226 615
- FR-A1- 2 859 991

## Description

L'invention concerne le domaine de l'industrie verrière. La fusion des matériaux constitutifs du verre nécessite l'apport d'une grande quantité d'énergie. La température du bain de verre est de l'ordre de 1300 à 1500°C. Selon sa composition, le verre est destiné à un usage ménager direct, les verres à boire, les bouteilles et contenants, le vitrage ; ou indirect, les plaques vitrocéramiques ; ou industrielle.

Le four est soumis à des contraintes thermiques et mécaniques très élevées. Le four est construit avec des revêtements réfractaires de haute qualité. Ces revêtements réfractaires sont onéreux et sensibles à certains constituants du verre susceptibles de réaction chimique. Les revêtements réfractaires étant de mauvais conducteurs de chaleur, le chauffage du bain de verre est effectué par le dessus.

On dispose un brûleur à flamme à combustible liquide ou gazeux entre le bain de verre et le sommet du four appelé voûte. Le bain de verre est chauffé par radiation pour l'essentiel. La température de sortie des gaz est de 1300 à 1600 °C selon la famille de verre.

Par ailleurs, la fabrication de verre dégage de grandes quantités de gaz. Le bain de verre est dégazé pendant plusieurs heures pour éviter la formation de bulles dans le verre. Pour faciliter le dégazage, des additifs d'affinage tels que des sulfates peuvent être utilisés. Le four fonctionne en continu en étant alimenté en matières premières à une extrémité et en recueillant le verre affiné à l'autre extrémité.

Les gaz de sortie, issus du dégazage et issus de la combustion, sont évacués par une cheminée.

La Demanderesse a poursuivi l'objectif d'une réduction majeure de la consommation d'énergie rapportée à la masse de verre produite.

Dans un verre sodo-calcique, les matériaux initiaux principaux sont du calcaire, de la soude par exemple sous forme de carbonate de sodium Na₂CO₃ et de la silice sous forme de sable de quartz. Le calcaire et le carbonate de sodium libèrent du CO₂ lors de l'affinage du verre.

Le document US 3 967 943 décrit la mise en oeuvre d'une solution aqueuse de silicate de sodium parfois nommée « verre d'eau » (« *waterglass* » en anglais). Il faut alors évaporer une quantité d'eau importante.

Le document US2005/0022557 décrit un pré-mélange Na₂CO₃ et SiO₂ et parallèlement un pré-mélange CaCO₃ et SiO₂ avec pré-réaction, suivi d'un mélange des deux pré-mélanges et d'un complément de SiO₂ puis de l'introduction dans un four de verrerie.

Le document US2012/0216574 concerne un procédé de fabrication de verre comprenant la calcination du CaCO₃ pour former du CaO, la formation d'un verre Na₂SiO₃ en phase liquide, et le mélange en phase liquide du CaO et du Na₂SiO₃ pour former un verre sodo-calcique.

CN107226615 A divulgue un procédé de fabrication de verre avec du silicate de sodium indéterminé et avec de l'oxyde de calcium.

Le document EP 2 668 139 décrit la fabrication de pastilles comprenant un noyau de

SiO₂, une couche intérieure de SiO₂ et de Na₂O et une couche extérieure de CaCO₃ et de Na₂CO₃. Les pastilles sont enfournées dans un four de verrerie.

FR 2859991 vise un procédé de préparation d'un silicate, pouvant être du silicate de soude, dans un bain à brûleurs immergés. CN 106630607 concerne un procédé de fabrication de verre avec du silicate de sodium indéterminé.

La Demanderesse a procédé à des essais. Le remplacement du Na₂CO₃ par du silicate de soude vitreux granulaire présente un bilan économique défavorable en raison du coût élevé du silicate de soude vitreux granulaire. Par ailleurs, de nombreuses exigences sont à prendre en compte. Les matières premières doivent être manipulables sans danger pour l'homme. Ainsi, la soude caustique anhydre est difficile à mettre en oeuvre. Les matières premières sont stockées à température ambiante allant de -20° à +50°C et à hygrométrie ambiante très variable. Le mélange étant difficile à réaliser dans le four, les matières premières sont mélangées avant l'enfournement. Certaines matières sont très hygroscopiques, en particulier en fonction inverse de leur granulométrie et/ou de leur formulation chimique. Or, la prise en masse des matières premières est à éviter. La mise en pastilles ou granulés nécessite une opération supplémentaire. Par ailleurs, les volages constituent des pertes de matières premières et surtout une cause d'encrassement des conduits de fumées diminuant le tirage du four et nécessitant des arrêts de production pour effectuer un nettoyage, travail pénible. La silice est difficile à fondre en raison d'une température de fusion élevée et d'une cinétique de fusion lente.

Malgré ces obstacles, la Demanderesse a poursuivi et mis au point un procédé de fabrication de verre offrant des performances énergétiques élevées, une usure réduite des parois du four, une fusion et un affinage du verre plus rapide.

La Demanderesse a mis au point un procédé de fabrication de verre avec du silicate de sodium vitreux granulaire. Un tel silicate de sodium vitreux granulaire permet une diminution des émissions de CO₂ de plus de 5%, une diminution des poussières dans les fumées de plus de 15%, une diminution de la consommation d'énergie de plus de 5%, une tirée spécifique (productivité) en augmentation de plus de 15% et des campagnes de chauffe plus longues d'au moins 20%. On entend ici par campagne de chauffe, le temps écoulé entre deux réfections complètes des parois réfractaires du four, de l'ordre de plusieurs années. De manière surprenante, la vitesse de fusion de la silice est augmentée ce qui réduit les risques de ségrégation entre les matières ayant des températures de fusion nettement différentes. La viscosité est diminuée, d'où un affinage plus rapide libérant les gaz dissous.

L'invention propose un procédé de fabrication de verre comprenant l'apport dans un four de verrerie de matières premières à l'état solide, lesdites matières premières comprenant du silicate de sodium vitreux granulaire et présentant un taux d'humidité inférieur à 1% en masse et de l'oxyde de calcium pulvérulent.

L'apport concomitant de grains de silicate de sodium vitreux et de poudre d'oxyde de calcium anhydre (chaux vive) évite la perte d'oxyde de calcium en volage, produit une fusion rapide en surface du bain dans le four malgré la granulométrie majoritairement millimétrique, voire centimétrique du silicate de sodium vitreux granulaire.

Les termes « silicate de sodium vitreux granulaire » s'entendent du silicate de sodium obtenu à partir d'un procédé de fusion de silice et d'une source de soude comprenant notamment le carbonate de soude par opposition au silicate de sodium obtenu par voie chimique - chlorure de calcium et soude caustique en paillettes, sous pression et à température élevée - utilisé par exemple en parapharmacie et dont le coût est considérablement plus élevé.

Les grains de silicate de sodium vitreux granulaire et la poudre d'oxyde de calcium sont mélangés avant enfournement.

Dans un mode de réalisation, le taux d'humidité du silicate de sodium vitreux granulaire est 0%.

Dans un mode de réalisation, ledit silicate de sodium vitreux granulaire présente une granulométrie comprise entre 0,1 et 30 mm. Une granulométrie inférieure à 0,1 mm provoque une augmentation des volages et un risque de prise en masse avant l'enfournement. Une granulométrie supérieure à 30 mm provoque un ralentissement de la fusion des matières premières, une hétérogénéité plus forte et une durée d'affinage plus longue. De façon inattendue, la plage de granulométrie est large, ce qui permet de mettre en oeuvre un broyeur à faible taux de refus.

Dans un mode de réalisation, le silicate de sodium vitreux granulaire est à la température ambiante. On évite un préchauffage.

Dans un mode de réalisation, le procédé comprend une étape préalable de stockage dudit silicate de sodium vitreux granulaire.

Dans un mode de réalisation, ledit silicate de sodium vitreux granulaire stocké est sous la forme de boulets, par exemple d'environ 40 à 60 mm, ou de plaques, par exemple de longueur et de largeur supérieures à 100 mm.

Dans un mode de réalisation, le procédé comprend une étape de broyage pour l'obtention de ladite granulométrie comprise entre 0,1 et 30 mm.

Dans un mode de réalisation, l'étape de broyage est effectuée moins de 7 jours avant l'enfournement dudit silicate de sodium vitreux granulaire. Le risque de prise en masse est très faible.

Dans un mode de réalisation, le silicate de sodium vitreux granulaire présente un ratio molaire compris entre 2,5 et 5 SiO₂ pour 1 Na₂O. Un point de fusion bas est obtenu. En dessous de 2,5, le point de fusion serait plus élevé et le silicate de sodium moins stable. Au-dessus de 5, le silicate de sodium vitreux granulaire serait plus difficile à fondre. Le silicate de sodium vitreux granulaire au ratio de 2,5 et 5 SiO₂ pour 1 Na₂O est peu sensible à l'humidité ambiante, au moins sous climat tempéré, et peut être stocké sans prise en masse. Préférablement, le ratio molaire est compris entre 2,5 et 3,5 SiO₂ pour 1 Na₂O.

Dans un mode de réalisation, au moins 17% du calcium est apporté par l'oxyde de calcium pulvérulent pour un verre sodocalcique.

Dans un mode de réalisation, au moins 80% du calcium est apporté par l'oxyde de calcium pulvérulent pour un verre sodocalcique.

Dans un mode de réalisation, au moins 99% du calcium est apporté par l'oxyde de calcium pulvérulent pour un verre sodocalcique.

Dans un mode de réalisation, au moins 80% du calcium est apporté par l'oxyde de calcium pulvérulent pour un verre fluosilicate.

Dans un mode de réalisation, au moins 99% du calcium est apporté par l'oxyde de calcium pulvérulent pour un verre fluosilicate.

Dans un mode de réalisation, le sodium est apporté à plus de 1% sous forme de silicate de sodium vitreux granulaire pour un verre sodocalcique.

Dans un mode de réalisation, le sodium est apporté à plus de 1% sous forme de silicate de sodium vitreux granulaire pour un verre fluosilicate.

Dans un mode de réalisation, le sodium est apporté entre 4 et 25%, plus préférablement entre 5 et 20%, plus préférablement encore entre 10 et 15% sous forme de silicate de sodium vitreux granulaire.

Dans un mode de réalisation, le silicate de sodium vitreux granulaire est mélangé aux autres matières premières comprenant notamment au moins un parmi carbonate de sodium, carbonate de calcium, oxyde de calcium, carbonate de magnésium, oxyde de magnésium, alumine, oxyde de bore, oxyde de potassium et fluosilicate de sodium.

Dans un mode de réalisation, le silicate de sodium vitreux granulaire est mélangé aux autres matières premières comprenant notamment au moins un parmi sodium, calcium, magnésium, bore, potassium, silicium, aluminium et fluor.

Dans un mode de réalisation, lesdites matières premières sont mélangées avant enfournement. Le bain en fusion est plus homogène.

Dans un mode de réalisation, l'oxyde de calcium et/ou l'oxyde de magnésium sont apportés après les autres matières premières. On peut prévoir qu'au moins une des autres matières premières présente une hygrophylie suffisante pour capter l'eau présente, notamment dans le sable, et ainsi empêcher la réaction eau-oxyde de calcium et/ou magnésium génératrice de poussières. On peut se passer d'un séchage du sable.

Dans un mode de réalisation, les matières premières sont sans apport volontaire de plomb.

Dans un mode de réalisation, le mélange desdites matières premières est dépourvu de fraction à l'état liquide. Le mélange reste granulaire.

Dans un mode de réalisation, ledit silicate de sodium vitreux granulaire apporte entre 2 et 50% du sodium du verre, le reste étant apporté sous forme de carbonate de sodium, de sulfate de sodium, de groisil et de feldspath.

Dans un mode de réalisation, ledit silicate de sodium vitreux granulaire apporte entre 4 et 15% du sodium du verre pour un verre sodo-calcique, le reste étant apporté sous forme de carbonate de sodium. Aux alentours de 10%, l'effet du silicate de sodium vitreux granulaire sur le point de fusion, la cinétique d'affinage, la réduction de l'usure des parois du four et la diminution des volages est très intéressant

Dans un mode de réalisation, ledit oxyde de calcium apporte entre 1 et 100% du calcium du verre, le reste étant apporté sous forme de carbonate de calcium de groisil, de dolomie et de feldspath. L'apport même faible de chaux vive pulvérulente présente un intérêt.

Dans un mode de réalisation, lesdites matières premières comprennent de la silice ou du sable siliceux, du carbonate de sodium, et du groisil pour obtenir un verre à Na₂O compris entre 10 et 20% en masse du total. On obtient un verre sodo-calcique de qualité. Dans un mode de réalisation, lesdites matières premières comprennent de la silice ou du sable siliceux, du groisil, une source de fluor, notamment du fluosilicate de sodium et une source d'alumine, notamment du feldspath. On obtient un verre fluosilicate adapté notamment à la fabrication d'assiettes et plats.

Dans un mode de réalisation, le chauffage du four, pour du verre sodocalcique, est assuré à plus de 50% par au moins un brûleur à flamme sensiblement horizontale, notamment à boucle et/ou latéral, le complément étant apporté par des électrodes. Le taux d'oxydes d'azote est faible.

Dans un mode de réalisation, le brûleur est alimenté en air et gaz combustible, notamment gaz naturel, ou fioul.

Dans un mode de réalisation, le brûleur est alimenté en oxygène et tout type de gaz combustible, notamment gaz naturel, ou fioul.

Dans un mode de réalisation, 4% à 30%, préférablement 10% à 20%, du sodium est apporté sous la forme de silicate de sodium vitreux granulaire, avec 0% du calcium apporté sous la forme d'oxyde de calcium, le calcium étant apporté sous forme notamment de carbonate de calcium, dolomie et feldspath au lieu de l'oxyde de calcium.

Dans un mode de réalisation, dans un four avec un brûleur aérogaz à boucle et un brûleur oxygaz en voûte, 10% du sodium est apporté sous la forme de silicate de sodium vitreux granulaire.

L'invention propose un procédé de fabrication de verre comprenant l'apport dans un four de verrerie de matières premières à l'état solide, lesdites matières premières comprenant du silicate de sodium vitreux granulaire à hauteur de 4% à 30%, préférablement 10% à 20% du sodium, et présentant un taux d'humidité inférieur à 1% en masse, sans apport d'oxyde de calcium.

L'invention propose un procédé de fabrication de verre comprenant l'apport dans un four de verrerie de matières premières à l'état solide, lesdites matières premières présentant un taux d'humidité inférieur à 1% en masse, et 10% à 50%, préférablement 20% à 40%, du calcium étant apporté sous la forme d'oxyde de calcium, avec 0% du sodium apporté sous la forme de silicate de sodium. L'invention concerne une installation de verrerie industrielle comprenant un four comprenant une cuve à verre fondu et un système d'alimentation en matières premières pourvues d'un organe d'alimentation en silicate de sodium vitreux granulaire. L'organe d'alimentation en silicate de sodium comprend un broyeur de silicate de sodium avec une sortie reliée à une entrée du four directement ou par l'intermédiaire d'un stockage tampon, et un stockage de silicate de sodium sous la forme de boulets ou de plaques relié à une entrée du broyeur.

On distingue le granulat obtenu par une cuisson, un broyage ou par prélèvement dans un gisement, d'une part, et le granulé issu d'une opération de granulation. Ici, on opère avec un granulat. Ledit granulat s'apparente, par l'aspect, à du groisil.

Dans un mode de réalisation, le système d'alimentation en matières premières comprend un mélangeur de matières premières disposé entre le four et l'organe d'alimentation en silicate de sodium vitreux granulaire. Le mélange peut être assuré par une bande transporteuse recevant les matières premières et les laissant chuter en aval.

Une homogénéité élevée avant l'entrée du four est obtenue. Ceci favorise la cinétique de fusion.

Dans un mode de réalisation, l'installation de verrerie comprend au moins un carneau d'évacuation des gaz de combustion provenant du four, le carneau débouchant dans un four de cuisson de matières premières verrières, notamment de calcaire et/ou de dolomie et plus largement de pierres minérales.

D'autres caractéristiques et avantages de l'invention apparaîtront à l'examen de la description détaillée ci-après, et des dessins annexés, sur lesquels :
- la figure 1 est une vue en coupe d'une installation combinée selon un aspect de l'invention ;
- la figure 2 est une vue en coupe d'une installation combinée selon un autre aspect de l'invention ;
- la figure 3 montre une variante de la figure 2 ;
- la figure 4 est une vue schématique en perspective d'un four de verrerie selon un mode de réalisation ;
- la figure 5 montre des courbes d'échauffement en fonction du temps pour du calcaire et quatre chaux ;
- la figure 6 montre des courbes d'échauffement en fonction du temps pour trois mélanges contenant de la chaux ;
- la figure 7 montre plusieurs courbes d'échauffement en fonction du temps pour dix essais en fonction de la température des matières premières, de l'humidité, du délai entre le prémélange et l'introduction de la chaux vive, et de la granulométrie du carbonate de sodium ;
- la figure 8 montre une sélection des courbes de la figure 7 sur le paramètre humidité ;-
- la figure 9 montre une sélection des courbes de la figure 7 sur le paramètre température ;
- la figure 10 montre une sélection des courbes de la figure 7 sur le paramètre granulométrie du carbonate de sodium ; et
- les figures 11 et 12 sont des vues schématiques en perspective d'une installation de verrerie selon deux modes de réalisation.

Les dessins annexés pourront non seulement servir à compléter l'invention, mais aussi contribuer à sa définition, le cas échéant.

La Demanderesse a conduit des essais industriels sur un four de production continue afin d'appréhender les phénomènes de cinétique de fusion et de mesurer des évolutions réelles de production. Un four de laboratoire à fonctionnement par lot, même de forte capacité, n'aurait pas permis une compréhension fine. Le four présente une production passée de verre sodocalcique avec brûleurs latéraux et approvisionnement en carbonate de calcium, carbonate de sodium, silice en tant que matières principales, alumine et dolomie en tant que matières secondaires, affinants, colorants et décolorants. L'alumine et la dolomie sont qualifiées de secondaires en raison de leurs proportions inférieures aux matières principales. Le feldspath peut apporter de l'alumine, mais aussi Si, Na et K. Les matières premières sont sans apport volontaire de plomb. Le mélange est dépourvu de fraction à l'état liquide.

Dans les essais rapportés ci-dessous, le silicate de sodium vitreux granulaire a été préparé à partir de plaquettes ou de boulets passés dans un broyeur. Les plaquettes peuvent mesurer de 10x10x10 mm à 20x200x200 mm. Les boulets peuvent mesurer de 40 à 70 mm sur chacune de leurs dimensions. En sortie du broyeur, la granulométrie du silicate de sodium vitreux granulaire était comprise entre 0,1 et 30 mm maximum. Ainsi, le tamisage est aisé et le taux de refus très faible. Le silicate de sodium vitreux granulaire est anhydre. Le silicate de sodium vitreux granulaire présente un taux d'humidité inférieur à 1%, en pratique de 0%. Le silicate de sodium vitreux granulaire présente un ratio molaire d'environ 3 SiO₂ pour 1 Na₂O. Préférablement, le ratio molaire est compris entre 2,5 et 3,5 SiO₂ pour 1 Na₂O. Les conditions de manipulation et de stockage peuvent amener une très faible prise d'humidité, dans certaines circonstances, tout en restant à taux inférieur à 1%.

Le sable présente une composition : SiO₂ au moins 99%, Al₂O₃ moins de 1%, K₂O moins de 0,1%, TiO₂ moins de 0,03%, Fe₂O₃ moins de 0,015%. Les autres éléments sont à l'état de traces. Le sable présente une granulométrie D50 comprise entre 0,20 et 0,25 mm. Le sable présente une granulométrie avec au plus 3% de refus au tamis de 0,355 mm, et au plus 1% de passage au tamis de 0,125 mm.

Le carbonate de sodium présente une composition : Na₂CO₃ 99,75%, NaCl 0,03% et H₂O moins de 0,1%. Les autres éléments sont à l'état de traces. Le carbonate de sodium présente une granulométrie D50 comprise entre 0,15 et 0,25 mm. Le carbonate de sodium présente une granulométrie avec au plus 0,5% de refus au tamis de 0,600 mm, au moins 90% de refus au tamis de 0,150 mm et au plus 2% de passage au tamis de 0,075 mm.

L'oxyde de calcium présente une composition : CaO au moins 93%, MgO moins de 2%, CO₂ moins de 2%, Fe₂O₃ moins de 0,1%, S moins de 0,06%. Les autres éléments sont à l'état de traces. L'oxyde de calcium présente une granulométrie D50 comprise entre 0,08 et 0,12 mm. L'oxyde de calcium présente une granulométrie avec au plus 1,6% de refus au tamis de 5,00 mm, et au plus 55% de passage au tamis de 0,090 mm.

Le groisil peut comprendre SiO₂ de 68 à 75%, Na₂O de 10 à 15%, CaO de 8 à 12% MgO de 0 à 3%, Al₂O₃ de 0 à 1%.

Les matières premières sont à la température ambiante moyennée sur quelques jours, soit de 5 à 20°C. Le taux d'humidité du mélange prêt à enfourner est supérieur à 0 et inférieur à 4%.

Dans l'essai A, mené avec un brûleur aérogaz à boucle et un brûleur oxygaz en voûte, 10% du sodium a été apporté sous la forme de silicate de sodium vitreux granulaire, en substitution partielle du carbonate de sodium et de la silice, le nombre de moles de Na et de Si étant conservé. Les autres matières premières sont inchangées. La composition du verre produit est conservée. L'effet attendu était une réduction des émissions de CO₂ à proportion de la substitution partielle, soit 3% de la freinte. Cette réduction a été obtenue. En plus, on a mesuré une diminution de 15,5% des volages et condensats par rapport à une production précédente sans substitution, soit 100% du calcium apporté sous la forme de carbonate de calcium et de dolomie, et 100% du sodium apporté sous la forme de carbonate de sodium et/ou de feldspath. La consommation d'énergie par tonne de verre produite a baissé de 2,6% lors d'une production maximale. La production journalière du four a augmenté de 19 %. La cause de cette augmentation est due à un changement d'eutectique dû à la basse température de fusion du silicate de soude employé. Le fait qu'une partie du silicium soit apporté dans une molécule à point de fusion plus bas que le point de fusion de la silice et des autres éléments tels que notamment le calcaire et l'alumine, contribue à un démarrage de fusion plus rapide et à une consommation d'énergie réduite. Contrairement au carbonate de soude, la soude sous forme silicate est déjà sous forme vitreuse.

Dans l'essai B, mené avec un brûleur aérogaz à boucle et un brûleur oxygaz en voûte, 100% du carbonate de calcium a été remplacé par de l'oxyde de calcium sous la forme de chaux vive, le nombre de moles de Ca étant conservé, et 9% du sodium du verre final a été apporté sous la forme de silicate de sodium vitreux granulaire, en substitution partielle du carbonate de sodium et de la silice, le nombre de moles de Na et de Si étant conservé. L'effet attendu était une réduction des émissions de CO₂ à proportion des substitutions partielles. Cette réduction a été obtenue. En plus, on a mesuré une diminution de 14,3% des volages. La consommation d'énergie par tonne de verre a baissé de 10,7% à iso-tonnage. La production journalière du four peut augmenter de 26%. Alors que la chaux vive est censée générer beaucoup de volages, ce résultat a été considéré comme très intéressant.

Dans l'essai C, mené avec un brûleur aérogaz à boucle, seul, sans brûleur oxygaz en 30 voûte, 100% du carbonate de calcium a été remplacé par de la chaux vive - oxyde de calcium, le nombre de moles de Ca étant conservé, et 9% du sodium du verre final a été apporté sous la forme de silicate de sodium vitreux granulaire, en substitution partielle du carbonate de sodium et de la silice, le nombre de moles de Na et de Si étant conservé. L'effet attendu était une réduction des émissions de CO₂ à proportion des substitutions partielles. Cette réduction a été obtenue. En plus, on a mesuré une diminution de 14,5% des volages. La consommation d'énergie par tonne de verre a baissé de 12,7%. La production journalière du four a augmenté de 20,7%. Alors que la chaux vive est censée générer beaucoup de volages dans un four à boucle, ce résultat a été considéré comme remarquable.

L'oxyde de calcium pulvérulent a été fourni en sacs (big-bags) de 790kg, de calibre 0 à 5 mm. L'oxyde de calcium présente une composition : CaO au moins 93%, MgO moins de 2%, CO₂ moins de 2%, Fe₂O₃ moins de 0,1%, S moins de 0,06%. Les autres éléments sont à l'état de traces. L'oxyde de calcium présente une granulométrie D50 comprise entre 0,08 et 0,12 mm. L'oxyde de calcium présente une granulométrie avec au plus 1,6% de refus au tamis de 5,00 mm, et au plus 55% de passage au tamis de 0,090 mm. L'oxyde de calcium a apporté dans le mélange des autres matières premières au moins 10 minutes après la fourniture des autres matières premières. Le taux d'humidité du mélange enfourné est de 2,5%.

Le début de fusion du silicate de sodium vitreux granulaire facilite la fusion des autres matières. Le début de fusion du silicate de sodium vitreux granulaire crée un effet de mouillage qui limite l'envol des particules fines de matière première, notamment du carbonate de sodium, d'alumine et d'oxyde de calcium dans les fumées, d'où la diminution des volages. La comparaison des essais B et C montre que le brûleur en voûte est facultatif avec un remplacement à 100% du calcaire par de l'oxyde de calcium et 9% du Na₂O dans le verre final proportionnellement sous forme de silicate de sodium vitreux granulaire. Les essais A à C ont été effectués sur le même four au cours de la même campagne de production et avec les mêmes matières premières, à l'exception des substitutions mentionnées. Les essais ont été menés sur une durée suffisante pour obtenir des résultats stabilisés.

Les essais D à G ont été menés sur un deuxième four à brûleurs aérogaz à boucle comme pour les essais A à C. Dans les essais D à G, l'oxyde de calcium a été livré en sacs (big-bags) préparés au poids souhaité. L'oxyde de calcium est le même que pour les essais A à C. Les essais D à G ont été effectués sur le même four au cours de la même campagne de production et avec les mêmes matières premières, à l'exception des substitutions mentionnées. Les essais ont été menés sur une durée suffisante pour obtenir des résultats stabilisés.

L'oxyde de calcium a été apporté dans le mélange des autres matières premières au moins 10 minutes après la fourniture des autres matières premières mélangées. Le taux d'humidité du mélange enfourné est de 2,5%.

Dans l'essai D, 21% du calcaire a été remplacé proportionnellement par de la chaux vive - oxyde de calcium - en substitution partielle du carbonate de calcium, le nombre de moles de Ca étant conservé, et 14% du Na₂O du verre final a été apporté proportionnellement sous la forme de silicate de sodium vitreux granulaire, en substitution partielle du carbonate de sodium et de la silice, le nombre de moles de Na et de Si étant conservé. L'effet attendu était une réduction des émissions de CO₂ à proportion des substitutions partielles. On a constaté une baisse de la température de fusion d'environ 25 à 30°C par rapport à une production précédente sans substitution, soit 100% du calcium apporté sous la forme de carbonate de calcium, et 100% du sodium apporté sous la forme de carbonate de sodium ou de feldspath. L'usure du four est diminuée d'environ 25%. La consommation d'énergie diminue de 5%. Le nombre d'inclusions de gaz dans le verre ne présente pas de variation significative.

Dans l'essai E, 21% du calcaire a été remplacé proportionnellement par de la chaux vive - oxyde de calcium - en substitution partielle du carbonate de calcium, le nombre de moles de Ca étant conservé, et 9% du Na₂O du verre final a été apporté proportionnellement sous la forme de silicate de sodium vitreux granulaire, en substitution partielle du carbonate de sodium et de la silice, le nombre de moles de Na et de Si étant conservé. L'effet attendu était une réduction des émissions de CO₂ à proportion des substitutions partielles. On a constaté une baisse de la température de fusion d'environ 25 à 30°C par rapport à une production précédente sans substitution, soit 100% du calcium apporté sous la forme de carbonate de calcium, et 100% du sodium apporté sous la forme de carbonate de sodium ou de feldspath. L'usure du four est diminuée d'au moins 30%. La consommation d'énergie diminue de 5%. Le nombre d'inclusions de gaz dans le verre, souvent dénommées puces, diminue de 45% et le nombre d'inclusions de gaz dans le verre, de dimension supérieure à 0,10 mm, diminue de 40%.

Dans l'essai F, 21% du calcaire a été remplacé proportionnellement par de la chaux vive - oxyde de calcium - en substitution partielle du carbonate de calcium, le nombre de moles de Ca étant conservé, et 4,5 à 5% du Na₂O du verre final a été apporté proportionnellement sous la forme de silicate de sodium vitreux granulaire, en substitution partielle du carbonate de sodium et de la silice, le nombre de moles de Na et de Si étant conservé. L'effet attendu était une réduction des émissions de CO₂ à proportion des substitutions partielles. On a constaté une baisse de la température de fusion d'environ 25 à 30°C par rapport à une production précédente sans substitution, soit 100% du calcium apporté sous la forme de carbonate de calcium, et 100% du sodium apporté sous la forme de carbonate de sodium ou de feldspath. L'usure du four est diminuée d'au moins 35%. La consommation d'énergie diminue de 3 à 5%. Le nombre d'inclusions de gaz dans le verre, souvent dénommées puces, diminue de 45 à 50% et le verre ne présente plus d'inclusion de gaz de dimension supérieure à 0,10 mm.

Dans l'essai G, 21% du calcium du verre final a été apporté sous la forme de chaux vive - oxyde de calcium - en substitution partielle du carbonate de calcium, le nombre de moles de Ca étant conservé. L'effet attendu était une réduction des émissions de CO₂ à proportion des substitutions partielles. On a constaté une baisse de la température de fusion. L'usure du four est diminuée d'au moins 35%. La consommation d'énergie diminue de 3%. Le nombre d'inclusions de gaz dans le verre, souvent dénommées puces, diminue de 55% et le nombre d'inclusions de gaz dans le verre, de dimension supérieure à 0,10 mm, diminue de 70%. Un taux de 10 à 30% du calcium du verre final apporté sous la forme de chaux vive - oxyde de calcium - s'avère intéressant. Un taux de 1 à 15%, préférablement 4 à 15%, plus préférablement 4 à 10%, du sodium du verre final apporté sous la forme de silicate de sodium vitreux granulaire s'avère intéressant.

Par ailleurs, dans les essais B à G, a été constatée une diminution de l'usure du four d'au moins 20% estimée par le taux d'oxydes réfractaires, notamment de Zircone, provenant du revêtement réfractaire du four dans le verre fabriqué. Un gain de temps entre deux réfections du revêtement réfractaire pour une même production annuelle est envisageable, ou un tonnage annuel produit plus élevé pour une même durée de vie du four. Une amélioration de la qualité du verre a été observée sur un four ayant dépassé 75% de sa durée de campagne, dans les essais D à G.

De manière générale un apport partiel du sodium sous la forme de silicate de sodium vitreux granulaire s'avère positif et ce pour des taux de sodium dans le verre s'étendant sur une large plage, tant qu'il y a un apport de sodium par une matière autre que du calcin et/ou apport de silicium par une matière autre que du calcin. Un apport très élevé risquerait de provoquer une diminution des performances obtenues, probablement par un effet d'isolation thermique par une couche fondue rapidement en surface. Le taux de sodium apporté sous la forme de silicate de sodium vitreux granulaire est compris entre 2 et 50%. Pour le verre sodo-calcique, le taux de sodium apporté sous la forme de silicate de sodium vitreux granulaire est préférablement compris entre 4 et 15%. Le reste étant apporté sous forme de carbonate de sodium, de feldspath ou de calcin entre 5 et 95%.

L'oxyde de calcium apporte entre 1 et 100% du calcium du verre, le reste étant apporté sous forme de carbonate de calcium, par exemple calcaire, dolomie, etc. L'oxyde de calcium est mélangé après l'étape de mélange des autres matières choisies parmi : carbonate de sodium, calcaire (carbonate de calcium), dolomie (carbonate de magnésium et carbonate de calcium), oxyde de bore, carbonate de potassium, sable (silice), feldspath (silice, soude, alumine), néphéline (silice, soude, alumine, potasse), alumine et fluosilicate de sodium. Un délai d'au moins 10 minutes est prévu entre la première et la deuxième étape de mélange.

Dans un mode de réalisation, les matières premières comprennent :
- chaux vive pulvérulente,
- silicate de sodium vitreux granulaire,
- sable siliceux,
- carbonate de sodium, et
- groisil granulaire pour obtenir un verre à Na₂O compris entre 10 et 20% en masse du total.

Dans un mode de réalisation, les matières premières comprennent :
- chaux vive pulvérulente,
- silicate de sodium vitreux granulaire,
- sable siliceux,
- groisil granulaire,
- fluosilicate de sodium pulvérulent ou granulaire et
- feldspath pulvérulent ou granulaire.

On entend ici par pulvérulent, un matériau de granulométrie médiane inférieure à 1 mm et par granulaire, un matériau de granulométrie médiane supérieure à 5 mm.

Les matières premières sont enfournées dans un four industriel de production de verre en continu. Dans un mode de réalisation, le four est muni d'un brûleur à flamme sensiblement horizontale ou brûleur en boucle, la flamme et les fumées parcourant un trajet en U à partir d'un pignon, au-dessus de la surface du bain de verre fondu ou en cours de fusion. Le brûleur en boucle, aérogaz ou fioul, peut être complété par un brûleur en voûte oxygaz ou oxyfioul, ou par au moins deux électrodes immergées de chauffage. Le chauffage du four est assuré à plus de 50% par le brûleur en boucle.

Dans un mode de réalisation, le four est muni de brûleurs latéraux aéro ou oxy combustion au gaz ou au fioul, à partir d'un ou des deux piédroits du four, au-dessus de la surface du bain de verre fondu ou en cours de fusion. Un complément peut être apporté par au moins deux électrodes immergées de chauffage. Le chauffage du four est assuré à plus de 50% par les brûleurs latéraux.

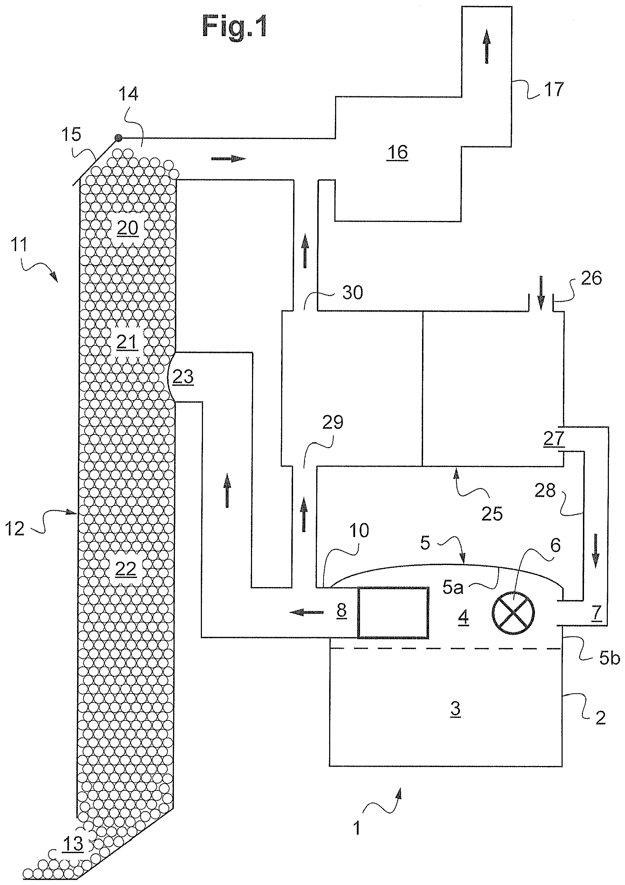

Dans un mode de réalisation, l'installation de verrerie comprend, en sortie du four, au moins un carneau d'évacuation des gaz de combustion provenant du four. Le carneau débouche dans un four de cuisson de matières premières verrières, voir figures 1 à 3.

Dans un mode de réalisation, on prévoit un four combiné à verre et à pierre. On entend par « four à pierre » un four de cuisson de pierre, telle que calcaire, dolomie, silex, alumine hydratée, susceptible de fournir en sortie de cuisson une matière première, notamment entrant dans la composition du verre.

Dans un mode de réalisation, une installation comprend un four verrier industriel comprenant une cuve à verre fondu, une chambre de chauffe à combustion située au-dessus de la cuve, et un conduit d'évacuation des fumées en communication avec la chambre de chauffe; et un four à pierre comprenant une zone de cuisson de pierre à cuire, le conduit d'évacuation des fumées comprend une sortie de fumées reliée à la zone de cuisson de pierre à cuire alimentant la zone de cuisson de pierre à cuire en fumées à haute température.

Le four à pierre fonctionne en croisement de flux. La pierre à cuire est chargée dans le haut du four à pierre et descend en se transformant sous l'effet de la chaleur. En bas du four à pierre est récupérée la chaux, la magnésie, la silice fragmentée, l'alumine déshydratée, etc. Les gaz chauds sont introduits dans le four à pierre. L'énergie thermique des gaz chauds est transférée à la pierre en cours de cuisson. La température de sortie des gaz peut être faible. Une excellente récupération d'énergie est effectuée, par récupération de l'énergie fatale.

Aux températures prévues dans le four à pierre :
- Le calcaire se transforme en chaux par calcination avec libération de CO₂.
- La dolomie se transforme en une combinaison d'oxyde de magnésium et d'oxyde de calcium par calcination avec libération de CO₂.
- Le silex comprend en général environ 90% de silice, et environ 10% de composés de Mg, Ca, Al et/ou Na. Ces espèces interviennent dans la fabrication du verre. Le silex porté à haute température devient friable et se fragmente. Au contraire, le silex non cuit présente une dureté élevée le rendant difficile à concasser. Or une granulométrie millimétrique est demandée pour une fusion plus rapide. Du silex de rivière, de mer ou de carrière peut être utilisé en cuisson - L'alumine hydratée se déshydrate à haute température.

Par ailleurs, une partie des gaz de sortie peut être envoyée dans le four à pierre et le reste dans un récupérateur alternatif en tandem. La production de chaux peut être adaptée à la demande.

Un autre avantage non prévu est apparu. Dans la présente installation, le chlore présent dans les fumées peut se déposer en surface des pierres à cuire et être recyclé dans le four verrier. Le chlore peut être présent associé à la chaux sous forme de chlorure de calcium et à la magnésie sous forme de chlorure de magnésium. Le chlore est un affinant qui favorise le dégazage du verre en fusion.

Le soufre est un meilleur affinant que le chlore. Le soufre présent dans les fumées peut se déposer en surface des pierres à cuire et être recyclé dans le four verrier. Le soufre peut être présent sous forme de sulfate de calcium, de sulfate de magnésium ou de sulfate de sodium. Le recyclage du soufre en sulfate associé à la pierre cuite permet de réduire d'environ 50% l'approvisionnement du four verrier en sulfate, notamment en sulfate de calcium. En outre, le traitement des fumées avant leur relâchement dans l'atmosphère est rendu plus simple, voire inutile.

L'installation permet un recyclage grâce à ses propriétés (i) auto-neutralisantes des espèces acides présentes dans les fumées et (ii) auto nettoyantes limitant les opérations de maintenance sur les conduits de fumées.

Ledit four à pierre ou un four à pierre supplémentaire peut également servir à la production d'oxydes de magnésium et de calcium. Ce mélange est alors produit par calcination de la dolomie. La mise en oeuvre dudit mélange d'oxydes de magnésium et de calcium permet de réduire la freinte, notamment le dégagement de CO₂.

Dans un mode de réalisation, ladite sortie de fumées est ménagée dans un carneau du conduit d'évacuation des fumées. On peut commander le débit de fumées dans ladite sortie de fumées.

Dans un mode de réalisation, la capacité du four verrier est supérieure à 10 tonnes de verre par jour. Le four est de type industriel.

Dans un mode de réalisation, l'installation comprend au moins deux fours verriers et un four à pierre. L'arrêt des fours verriers peut être décalé pour assurer une continuité de chauffe du four à pierre. L'installation peut également comprendre un récupérateur d'énergie des fumées dans le cas de l'air comburant.

Dans un mode de réalisation, l'installation comprend un four verrier, un four à pierre et un brûleur d'appoint apte à chauffer le four à pierre. Une production soutenue et constante par le four à pierre est obtenue.

Dans un mode de réalisation, la zone de cuisson est tubulaire, une zone d'alimentation en pierre à cuire étant disposée au-dessus et une zone de retrait de pierre cuite étant disposée en dessous. En four classique, la pierre cuite est refroidie par l'air comburant introduit par-dessous. Ici, une faible dépression est réglée dans la zone de retrait de pierre cuite afin d'éviter l'échappement de fumées par le bas. Un débit d'air montant est donc prévu. Dans le cas où les fumées sont à température trop élevée, par exemple pour le revêtement du four à pierre, une dépression plus élevée est réglée d'où une dilution des fumées dans la zone de cuisson et un abaissement de température.

Dans le cas contraire où l'on veut conserver la température de la zone de cuisson à une valeur élevée, une dérivation de l'air entré par la zone de retrait de pierre cuite et se trouvant dans le bas de la zone de cuisson est mise en place. La dérivation peut être dirigée vers l'entrée d'air du four verrier. La dérivation peut être dirigée vers une entrée d'un régénérateur permettant de limiter son refroidissement lors de son fonctionnement en alimentation du four verrier. La dérivation peut être dirigée vers une zone du four à pierre située au-dessus de la zone de cuisson.

Dans un mode de réalisation, est prévu un procédé de cuisson de pierre à cuire :
- de la pierre à cuire est introduite dans une zone de cuisson de pierre à cuire, et
- la zone de cuisson est alimentée en fumées issues de la combustion provenant d'un conduit d'évacuation des fumées monté en aval d'une chambre de chauffe à combustion d'un four verrier industriel comprenant une cuve à verre fondu et ledit conduit d'évacuation des fumées en communication avec la chambre de chauffe lors de la chauffe du four verrier.

Dans un mode de réalisation, la pierre à cuire est choisie parmi calcaire, dolomie, silex ou alumine hydratée. La cuisson du calcaire et de la dolomie est une calcination, c'est-à-dire une libération de CO₂ ou décarbonatation. La cuisson du silex est une fragmentation thermique. La cuisson de l'alumine hydratée est une dessiccation par élimination de l'eau liée.

Au cours de la montée en température de la pierre à cuire, il y a élimination de l'eau libre puis de l'eau liée, puis décomposition des carbonates en oxydes et CO₂. Dans un four à chaux à combustion au gaz naturel, le combustible est introduit dans une ou des zone(s) de combustion du four à chaux et l'air comburant est introduit partiellement par en bas dans la zone de retrait de la chaux et/ou dans la ou les zone(s) de combustion.

Ici, le four à pierre est à gaz chaud. Les gaz chauds sont introduits dans une zone située à environ 2/3 de la hauteur du four à pierre.

On peut prévoir un four à pierre de hauteur entre 20 et 30 m et de diamètre intérieur de 3 à 5 m, avec une zone de cuisson de 3 à 4 m de hauteur.

Dans un mode de réalisation, la température maximale au sein de la zone de cuisson de pierre à cuire est supérieure à 900°C, préférablement supérieure à 1000°C. La décarbonatation se produit rapidement.

Dans un mode de réalisation, la cuisson de la pierre à cuire abaisse la température des fumées jusqu'à moins de 300°C, préférablement moins de 200°C. Les fumées ressortent à 100°C ou légèrement plus par le gueulard du four à pierre. Les pertes énergétiques sont très faibles et la condensation de la vapeur d'eau provenant des fumées et de la dessiccation des pierres à cuire est évitée.

Dans un mode de réalisation, la température des fumées est abaissée de plus de 900°C, préférablement de plus de 1100°C, plus préférablement de plus de 1200°C. Les fumées peuvent entrer dans le four à pierre à plus de 1300°C, par exemple environ 1500°C. La puissance récupérée peut être comprise entre 10 et 30 kW dans un four, par tonne de production journalière de verre.

Dans un mode de réalisation, la pierre à cuire séjourne dans la zone de cuisson de pierre à cuire pendant une durée comprise entre 1 et 4 h et dans le four à pierre pendant 12 à 36 h.

Dans un mode de réalisation, la pierre à cuire est déplacée à contre-courant des gaz de combustion.

Dans un mode de réalisation, les fumées comprennent des composants chlorés et lesdits composants chlorés sont piégés sur la pierre à cuire dans le cas d'utilisation de dolomie et de calcaire. En sortie on obtient un mélange d'oxydes de magnésium et de calcium ou une chaux à teneur en chlorures compatible avec une utilisation verrière.

Dans un mode de réalisation, les fumées comprennent des composants soufrés, et lesdits composants soufrés sont piégés sur la pierre à cuire, notamment dans le cas d'utilisation de dolomie et de calcaire. En sortie du four à pierre, on obtient une pierre composée notamment d'oxydes de magnésium et de calcium ou de la chaux, à teneur en sulfates compatible avec une utilisation verrière.

Le four à pierre est ainsi auto-neutralisant et autonettoyant pour les fumées dont la teneur en S et Cl exige dans les conditions ordinaires un traitement spécifique. Un traitement de neutralisation des fumées est inutile.

Dans un mode de réalisation, le verre obtenu dans le four verrier industriel est sodo-calcique, borosilicate, aluminosilicate, de quartz ou vitrocéramique.

La Demanderesse a effectué des essais de calcination de pierre calcaire dans le carneau d'un four verrier industriel en fonctionnement. La masse des échantillons de pierre calcaire était de 396 à 633 grammes. La température en début de calcination était comprise entre 1240 et 1340°C. La température en fin de calcination était comprise entre 1290 et 1380°C. La réaction de calcination CaCO₃ CaO + CO₂ entraîne une perte de masse théorique de 43%. Les durées de calcination inférieures à 1 heure produisent des pertes de masse trop faibles indicatrices d'une calcination incomplète. Une calcination d'une heure produit une perte de masse de 42,1%. Une calcination de 1,75 à 2,25 heures produit une perte de masse de 43,7 à 44% traduisant une calcination complète et une légère perte de matière à la récupération de l'échantillon. La perte est liée aux conditions de l'essai et peut être évitée dans un procédé de nature industrielle. Les fumées de sortie du four verrier permettent la calcination du calcaire. Les autres pierres à cuire peuvent comprendre la dolomie, le silex, l'alumine hydratée.

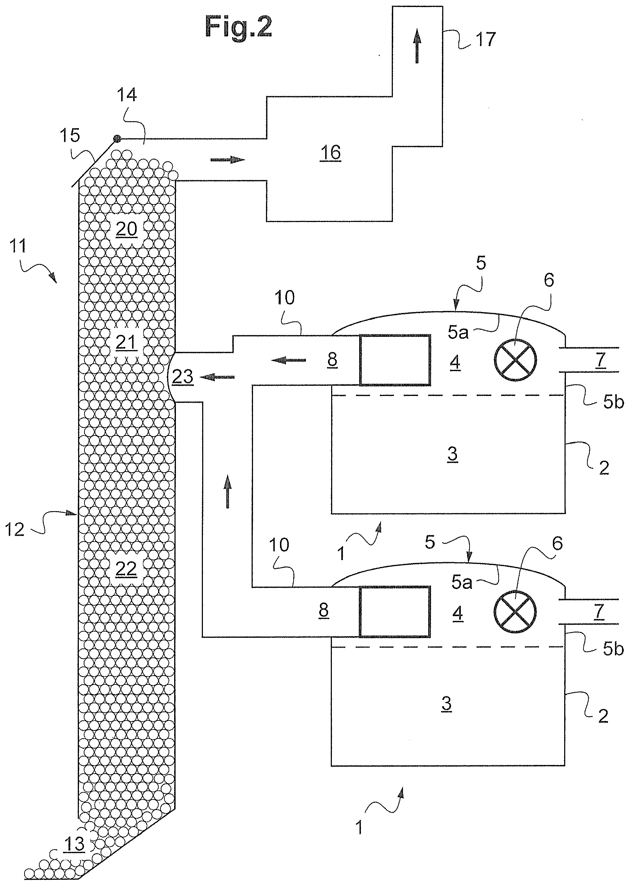

Le four verrier 1 comprend une cuve 2 à verre fondu 33 pour une production par lot. Le four verrier 1 comprend une chambre de combustion 3 située au-dessus du bain de verre fondu 33 et une paroi supérieure 5 composée d'une voûte 5a et de parties verticales dites pieds droits (longueur) ou pignons (largeur) 5b délimitant la chambre de combustion 3. Le four verrier 1 comprend au moins un brûleur 6 alimenté en fioul ou gaz et une entrée de comburant 7. Le comburant peut être de l'air, cf figure 1, ou de l'oxygène, cf figure 2.

La cuve 2 et la paroi supérieure 5 sont réalisées en matériaux réfractaires, renforcés par une structure métallique extérieure distante des zones de haute température. Le brûleur 6 est à flamme orientée horizontalement dans la chambre de combustion 3. Le four verrier 1 comprend une sortie de fumées 8 ménagée dans un des parois verticales 5b au-dessus du bain de verre fondu. Le brûleur 6 et la sortie de fumées 8 peuvent être prévus sur un même petit côté de manière que la flamme et les fumées effectuent un trajet en U dans la chambre de combustion 3. Le four verrier 1 peut être un four à boucle.

En aval du four verrier 1 dans le sens de déplacement des fumées, l'installation comprend un carneau 10. Le carneau 10 est un conduit de fumées sensiblement horizontal. Le carneau 10 est en communication de fluide avec la chambre de combustion 3 par la sortie de fumées 8. Le carneau 10 est réalisé en matériaux réfractaires renforcés par une structure métallique extérieure distante des zones de haute température. Le carneau 10 est pourvu d'un embranchement et possède deux sorties. Le carneau 10 est dépourvu de vanne.

En aval du four verrier 1 dans le sens de déplacement des fumées, l'installation comprend un four à pierre 11. Le four à pierre 11 peut être un four à chaux. Le four à pierre 11 présente une structure orientée verticalement. Le four à pierre 11 présente une forme de révolution. Le four à pierre 11 est réalisé en matériaux réfractaires renforcés par une structure métallique extérieure distante des zones de haute température. Le four à pierre 11 peut présenter une hauteur de 25 m et un diamètre de 4 m à titre d'exemple. Le four à pierre 11 comprend une chambre 12 d'axe vertical, une ouverture inférieure 13 et une ouverture supérieure 14 ou gueulard. L'ouverture inférieure 13 permet le retrait de la pierre cuite et l'introduction d'air en quantité permettant d'éviter une sortie de fumées par ladite ouverture inférieure 13.

L'ouverture supérieure 14 permet l'introduction de la pierre à cuire, par exemple par une trappe 15 et la sortie des fumées. L'ouverture supérieure 14 peut être munie d'un séparateur pour, d'une part, traiter les fumées, notamment les dépoussiérer dans un filtre 16, et, d'autre part, alimenter le four à pierre 11 en pierre à cuire. En aval du filtre 16, est prévue une cheminée 17 apte à évacuer les fumées dépoussiérées et refroidies. En aval du filtre 16, les fumées sont propres à être relâchées dans l'atmosphère alors que le filtre reçoit directement les fumées provenant du four à pierre 11 ou d'un récupérateur d'énergie.

La chambre 12 est de structure générale étanche. La chambre 12 comprend une zone de préchauffage 20 voisine de l'ouverture supérieure 14, une zone de cuisson 21 située sous la zone de préchauffage 20 et une zone de refroidissement 22 située sous la zone de cuisson 21 et voisine de l'ouverture inférieure 13. Entre la zone de cuisson 21 et la zone de refroidissement 22, la chambre est pourvue d'une ouverture 23 en communication de fluide avec une des sorties du carneau 10. La zone de refroidissement 22 présente une hauteur de 55 à 75% de la hauteur de la chambre 12. La zone de cuisson 21 présente une hauteur de 5 à 20% de la hauteur de la chambre 12. La zone de préchauffage 20 présente une hauteur de 10 à 25% de la hauteur de la chambre 12.

L'installation comprend également un échangeur thermique 25 en communication de fluide avec l'autre desdites sorties du carneau 10. L'échangeur thermique 25 transfère l'énergie thermique des fumées vers l'air alimentant le four verrier 1. Le transfert peut être par des plaques thermo-conductrices dans le cas d'un récupérateur. Le transfert peut être par un thermo-stockage intermédiaire dans des matériaux à forte capacité calorifique dans le cas d'un régénérateur. Des flux de fumées et d'air comburant s'alternent, l'un chauffant, l'autre refroidissant le régénérateur, au moyen de volets mobiles.

L'échangeur thermique 25 est pourvu d'une entrée d'air ambiant 26 et d'une sortie d'air chaud 27. La sortie d'air chaud 27 est reliée par une conduite 28 à l'entrée de comburant 7. L'échangeur thermique 25 est pourvu d'une entrée de fumées chaudes 29 alimentée par l'autre desdites sorties du carneau 10 et d'une sortie de fumées refroidies 30 débouchant vers le filtre 16.

Dans le mode de réalisation illustré sur la figure 2, le four verrier est un four oxygaz, c'est-à-dire à gaz carburant, en général du méthane, et à oxygène comburant. Les débits de gaz en entrée et en sortie sont alors réduits, notamment de 80% en entrée du comburant en raison de l'absence d'azote contenu dans l'air. De ce fait, la teneur en NOₓ peut être divisée par 3. Les fumées sont composées essentiellement de vapeur d'eau provenant de la combustion du gaz et de gaz carbonique provenant de la combustion du gaz et du dégazage du verre, ainsi que d'autres gaz de dégazage. Le débit de fumées étant plus faible que dans le mode de réalisation précédent, on peut coupler au moins deux fours verriers 1 et un four à pierre 11.

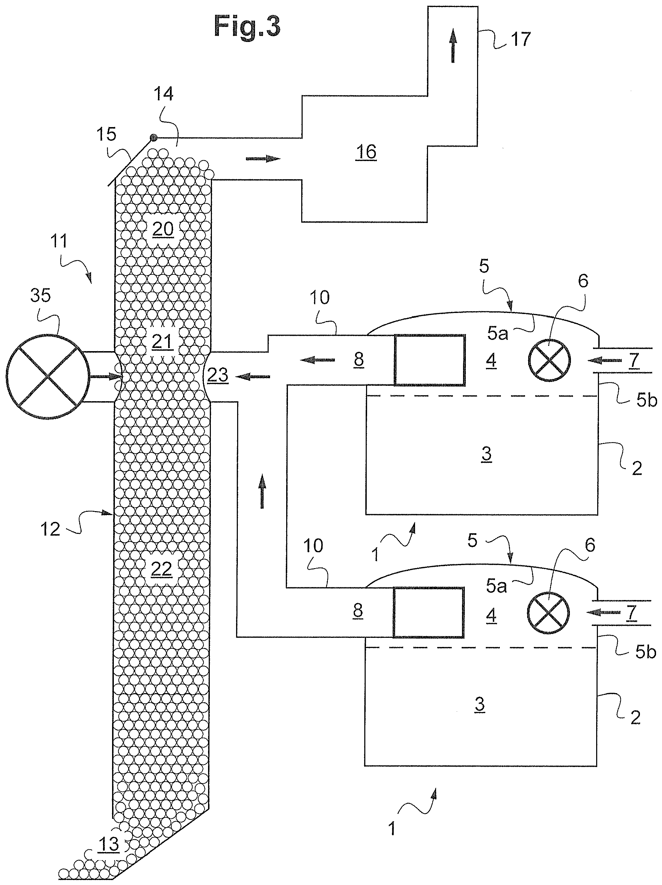

Dans le mode de réalisation illustré sur la figure 3, un brûleur d'appoint 35 est prévu dans le four à pierre 11 en consommant l'air montant dans la zone de refroidissement 22 ou à côté du four à pierre 11 fournissant un débit supplémentaire de fumées à haute température.

Dans les modes de réalisation ci-dessus, les fumées ressortent du four à pierre à basse température, en ayant perdu une part importante des chlorures et sulfates que lesdites fumées contenaient en sortie du four verrier. Il y a donc neutralisation et nettoyage des fumées au point que la neutralisation des fumées en aval devient inutile. La neutralisation produit des composés CaCl₂et CaSO₄ en cas de chaux, MgCl₂ et MgSO₄ en cas de dolomie, restant dans la pierre cuite. Ces composés assurent un apport de chlorures et sulfates dans le bain de verre.

L'invention présente un intérêt accru lorsque le four verrier produit une nuance de verre nécessitant une température élevée, notamment borosilicate, par exemple Pyrex^{®}, ou 15 vitrocéramiques.

En d'autres termes, la pierre à cuire comprend au moins un parmi : calcaire, dolomie, silex ou alumine hydratée. La pierre à cuire est introduite dans le four à pierre par le haut et entame une descente la menant après cuisson à sortir par le bas du four à pierre en y ayant parcouru la chambre. La chambre comprend une zone de préchauffage, une zone de cuisson et une zone de refroidissement dans cet ordre dans le sens de descente de la pierre.

Les gaz parcourant la chambre sont montants. Lesdits gaz peuvent comprendre de l'air ambiant entrant par le bas et ressortant soit en haut du four à pierre, soit en haut de la zone de refroidissement. Lesdits gaz comprennent des fumées de combustion. Les fumées de combustion entrent dans le bas de la zone de cuisson de pierre à cuire. Les fumées de combustion parcourent la zone de cuisson et la zone de préchauffage. Les fumées de combustion proviennent d'un conduit d'évacuation des fumées monté en aval d'une chambre de chauffe à combustion d'un four verrier industriel. Le four verrier industriel comprend une cuve à verre fondu et ledit conduit d'évacuation des fumées en sortie de la chambre de chauffe lors de la chauffe du four verrier. Les fumées de combustion sont à une température comprise entre 1300 et 1500°C en sortie de la chambre de chauffe. Les fumées en sortie du four à pierre sont à une température comprise entre 100 et 200°C, préférablement entre 100 et 150°C.

Dans ce qui suit est décrit l'effet de l'introduction d'oxyde de calcium dans le mélange en remplacement du carbonate de calcium.

La Demanderesse a procédé à des essais. Le remplacement du calcaire par de la chaux vive dans les matériaux de fabrication du verre pose des difficultés, notamment liées à la réactivité de la chaux avec l'humidité de l'air. Le bilan économique de la chaux est moins favorable que celui du calcaire malgré un tonnage transporté et manipulé réduit. Par ailleurs, une chaux de forte granulométrie est lente à fondre dans le bain verrier et peut laisser des infondus. Une chaux de faible granulométrie génère des volages entraînés par les gaz de combustion. Une partie de la chaux est perdue et vient encrasser les conduits de fumée en aval du four.

Malgré ces obstacles, la Demanderesse a poursuivi et mis au point un mélange précurseur de verre. Une difficulté est apparue lors de la préparation du mélange. En l'absence d'eau, le mélange pulvérulent n'a pas de tenue et génère des volages en grande quantité. Mais l'eau et la chaux réagissent ensemble de manière exothermique. La température atteinte rend le mélange difficile à manipuler.

La Demanderesse a mis au point un procédé de préparation d'un mélange précurseur fournissant un mélange à faible échauffement et à faible génération de volage. La granulométrie des constituants apportés au mélange est sensiblement conservée à ceci près que les manipulations mécaniques de transfert peuvent générer un effet de broyage réduisant légèrement la granulométrie. Ledit mélange introduit dans un four verrier permet une réduction de l'énergie nécessaire à la production de verre et de la quantité de CO₂ dégagée de l'ordre de 3 à 6%. Par ailleurs, la durée de la fonte du mélange est inférieure à la durée constatée lors de l'utilisation de carbonate de calcium. Il en découle une augmentation de la productivité du four, se traduisant aussi par une baisse supplémentaire de la consommation d'énergie de l'ordre de 4 à 6%.

Dans un mode de réalisation, un procédé de fabrication de verre comprend la préparation d'un mélange précurseur de verre pour four verrier, dans lequel on mélange de l'eau, du sable et du carbonate de sodium dans des proportions massiques comprises entre 0 et 5 %, 40 et 65 %, et plus de 0 et au plus 25 % respectivement, et, après un délai d'au moins 10 minutes et de moins d'une heure, on ajoute de l'oxyde de calcium dans une proportion massique comprise entre 1 et 20 % du total.

Dans un mode de réalisation, un procédé de fabrication de verre comprend la préparation d'un mélange précurseur de verre pour four verrier, dans lequel on mélange de l'eau, du sable et du carbonate de sodium dans des proportions massiques comprises entre 0 et 5 %, 40 et 65 %, et plus de 0 et au plus 25 % respectivement, et, après un délai d'au moins une heure, on ajoute de l'oxyde de calcium dans une proportion massique comprise entre 1 et 20 % du total. La préparation du mélange précurseur ne voit pas d'échauffement spontané significatif ou à tout le moins susceptible de présenter un inconvénient. Le retard à l'apport d'oxyde de calcium laisse le temps au carbonate de sodium de capturer l'eau disponible, notamment dans le sable. La Demanderesse s'est rendu compte de l'intérêt qu'il y a à se passer de réaction chimique faisant intervenir la chaux avant l'enfournement.

Dans un mode de réalisation, la proportion massique d'eau est comprise entre 1,5 et 3 %. Le risque de génération de volages, même avec des fractions de mélange de faible granulométrie, est réduit.

Dans un mode de réalisation, ledit délai est d'au moins une heure.

Dans un mode de réalisation, ledit délai est compris entre au moins 10 minutes et moins d'une heure pour un mélange eau, sable et carbonate de sodium à au plus 4,1% d'humidité.

Dans un mode de réalisation, le carbonate de sodium présente une granulométrie avec moins de 5% passant au tamis de 0,075 mm, moins de 15 % passant au tamis de 0,150 mm et moins de 5% ne passant pas au tamis de 0,600 mm.

Dans un mode de réalisation, ledit mélange eau, sable et carbonate de sodium présente au plus 3% d'humidité avec du carbonate de sodium de granulométrie majoritairement supérieure à 0,500 mm et inférieure à 1,000 mm.

Dans un mode de réalisation, ledit mélange eau, sable et carbonate de sodium présente au plus 2% d'humidité avec du carbonate de sodium de granulométrie majoritairement inférieure à 0,250 mm.

Dans un mode de réalisation, ledit délai est de moins de 72 heures.

Dans un mode de réalisation, la température initiale des matières premières est d'au moins 30°C. La vitesse d'hydratation du carbonate de sodium est augmentée.

Dans un mode de réalisation, l'oxyde de calcium présente une granulométrie telle que 70 à 90% en masse ne passe pas au tamis de 0,1 mm, préférablement 30 à 80% en masse ne passe pas au tamis de 0,5 mm, plus préférablement 30 à 70% en masse ne passe pas au tamis de 2 mm. La génération de volages est faible.

Dans un mode de réalisation, l'oxyde de calcium présente une granulométrie telle que plus 90 % en masse ne passe pas au tamis de 0,1 mm et moins de 5 % en masse ne passe pas au tamis de 4 mm, préférablement plus de 95 % en masse ne passe pas au tamis de 0,1 mm et moins de 1 % en masse ne passe pas au tamis de 4 mm. La quantité d'air introduit dans le four avec le mélange est faible et les infondus sont rares.

Dans un mode de réalisation, l'oxyde de calcium présente une granulométrie moyenne comprise entre 1 et 1,5 mm.

Dans un mode de réalisation, le mélange précurseur est mis en oeuvre dans un four verrier moins de 1 heure après sa préparation pour une granulométrie de 90% ou plus en masse passant au tamis de 0,1 mm, préférablement moins de 2 heures après sa préparation pour une granulométrie de 70 à 90% en masse passant au tamis de 0,1 mm. Une granulométrie fine est associée à une réactivité élevée et à une mise en oeuvre rapide. La fusion est alors rapide.

Dans un mode de réalisation, le mélange précurseur est mis en oeuvre dans un four verrier moins de 8 heures après sa préparation pour une granulométrie de 70% ou plus en masse passant au tamis de 2 mm. Une granulométrie moyenne permet une mise en oeuvre souple avec des durées de stockage intéressantes industriellement.

Dans un mode de réalisation, ledit sable est sec. La quantité d'eau apportée est bien maîtrisée. Dans la variante sans apport d'eau, de préférence associée à une granulométrie moyenne ou forte, l'énergie consommée est réduite. Le sable est considéré comme sec à une humidité inférieure à 0,1%. Le sable peut être séché par chauffage à une température de 15 à 20°C au-dessus de la température ambiante.

Dans un mode de réalisation, l'eau est présente dans ledit sable, préférablement 3 à 4% en masse. Le coût d'un apport d'eau volontaire est évité.

Dans un mode de réalisation, l'oxyde de calcium est dépourvu d'addition volontaire 20 d'oxyde d'aluminium. De l'oxyde d'aluminium peut être apporté lors du mélange de l'eau, du sable et du carbonate de sodium.

Dans un mode de réalisation, on ajoute du calcin au mélange précurseur de verre, avant ou après l'ajout d'oxyde de calcium, dans une proportion massique comprise entre 5 et 40 % du total. Le calcin peut provenir de lots de verre déclassés. Les lots sont de composition connue de sorte que les quantités des autres matières premières est ajustée à la qualité de verre souhaitée.

Dans un mode de réalisation, le mélange précurseur de verre est préparé à l'état solide. On évite l'évaporation de l'eau dans le cas d'une bouillie. On évite la consommation d'énergie d'une fusion préalable des matières premières. Dans un mode de réalisation, le mélange précurseur de verre est préparé à une température comprise entre la température ambiante et la température ambiante augmentée de 20°C.

Dans un mode de réalisation, le mélange précurseur de verre est préparé à une température comprise entre +0 et +20°C de la température préalable de l'eau, du sable, du carbonate de soude et de l'oxyde de calcium. Une moyenne pondérée peut être prise comme température préalable.

Dans un mode de réalisation, le mélange précurseur de verre est préparé sans apport d'énergie thermique. On évite une dessiccation du mélange, génératrice de fines et donc de volages.

Dans un mode de réalisation, ledit mélange est enfourné dans un four électrique.

Dans un mode de réalisation, on fournit dans un four de verrerie un mélange d'eau, de sable, de soude et d'oxyde de calcium, l'oxyde de calcium étant dans une proportion massique comprise entre 1 et 20 % du total du mélange, et on met le mélange en fusion par au moins un brûleur à flamme dirigée vers le mélange. Ledit brûleur offre un bon rendement et un effet de glaçage des volages vers la surface du bain de verre en cours de fusion ou fondu.

Dans un mode de réalisation, le comburant fourni au brûleur est de l'oxygène. L'effet de glaçage des volages est accru.

Dans un mode de réalisation, l'eau, le sable, le carbonate de sodium et l'oxyde de calcium sont présents dans des proportions massiques comprises entre 0 et 5%, 40 et 65%, 1 et 25%, et 1 et 20 % respectivement.

Dans un mode de réalisation, la décarbonatation du Na₂CO₃ est effectuée dans le four de verrerie en phase liquide.

Dans un mode de réalisation, un four de verrerie industrielle comprenant une cuve à verre fondu, une chambre de chauffe à combustion située au-dessus de la cuve et délimitée par des piédroits, des pignons et une voûte, un conduit d'évacuation des fumées en communication avec la chambre de chauffe, un brûleur à boucle disposé dans une direction parallèle au conduit d'évacuation des fumées, et un brûleur à flamme dirigée vers la cuve à verre fondu.

Dans un mode de réalisation, le brûleur à flamme est disposé dans une voûte du four.

Dans un mode de réalisation, le four de verrerie est stationnaire. La fragilité des fours rotatifs est évitée.

Des essais rapportés ci-dessous ont été menés.

### 1) Essai de température sur un lot de mélange précurseur de verre sodocalcique

On procède à la pesée de matières premières pour 20 kg de mélange précurseur. Le sable a été séché puis réhumidifié pour une teneur en eau reproductible. Les autres matières premières sont ajoutées en une fois à l'instant t₀. Le mélange est effectué pendant 100 secondes en toupie de type bétonnière. 16 kg sont prélevés et mis dans un récipient fermé. La température est relevée pendant 2 heures par un thermocouple positionné au centre du lot dans le récipient fermé. L'eau est la même pour les 5 lots. Le sable et le carbonate de sodium proviennent des mêmes lots industriels des mêmes fournisseurs. Cinq sources de calcium sont comparées :
- Calcaire
- Chaux vive A blanche livrée en vrac, D₅₀ à 0,1 mm
- Chaux vive B marron livrée en vrac, D₅₀ à 0,1 mm
- Chaux vive C livrée en grands sacs d'environ 1 tonne, calibre 4/8 mm
- Chaux vive D, D₅₀ à 1,2 mm.

La notation D₅₀ signifie que 50% de la matière en masse présente une granulométrie inférieure et 50% une granulométrie supérieure. Le calibre est une notation commerciale indiquant une prépondérance de la granulométrie située dans la plage 4 à 8 mm.

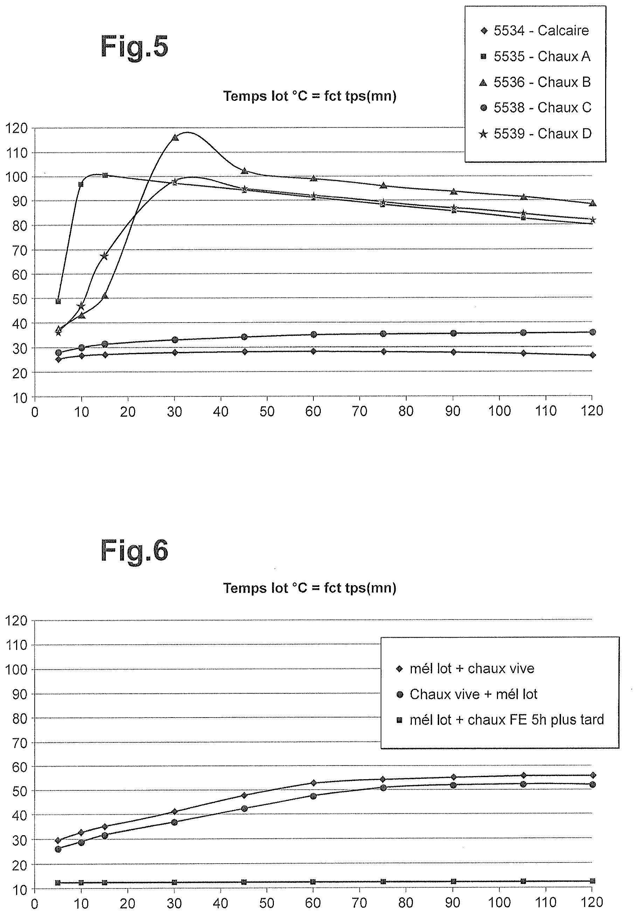

Les courbes de la figure 5 débutent à l'instant t = t₀ +5 minutes en raison du temps de remplissage du récipient, d'installation du thermocouple et de fermeture du récipient. Les courbes montrent une élévation de température inférieure à 5°C avec le calcaire, d'environ 15°C avec la chaux vive C livrée en grands sacs, d'environ 75°C à t = t₀ + 35 minutes avec la chaux vive D, d'environ 75°C à t = t₀ + 12 minutes avec la chaux vive A blanche livrée en vrac, de plus de 90°C à t = t₀ + 30 minutes avec la chaux vive B marron livrée en vrac.

Le faible échauffement avec la chaux vive C peut s'expliquer par la granulométrie très élevée et par une reprise d'humidité antérieure ayant en partie hydraté la chaux et faisant perdre un éventuel gain énergétique. Une chaux éteinte introduite dans un four verrier est déshydratée sous l'effet de la chaleur ce qui impacte le bilan énergétique par l'énergie nécessaire à la déshydratation et l'énergie chauffant l'eau supplémentaire à la température du four. Toutefois une chaux de forte granulométrie est moins sujette à une hydratation involontaire et l'hydratation est plus lente qu'avec une chaux de faible granulométrie.

Les différences d'échauffement et de temps d'échauffement entre les chaux vives A et B livrées en vrac, blanche et marron, s'expliquent par une composition différente sans être très significatives.

Les trois lots d'essais ayant subi un échauffement élevé fournissent un mélange générant beaucoup de volages, c'est-à-dire de poussières en partie perdues par l'aspiration des cheminées et ne participant pas au verre obtenu. Par ailleurs, l'échauffement élevé rend le mélange difficile à manipuler pendant plusieurs heures. On pourrait profiter de cet échauffement élevé pour enfourner un mélange chaud et améliorer le bilan thermique du four de verrerie. Le gain serait de l'ordre de 1 à 1,5 %.

### 2) Essai de phasage du même mélange

A la suite d'une manipulation interrompue de manière inopinée, la chaux a été introduite dans le mélange avec retard. Il a été procédé au mélange de l'eau, du sable et du carbonate de sodium. Le sable et le carbonate de sodium proviennent des mêmes lots industriels que dans le premier essai. La chaux est de calibre 0/5 mm. La chaux a été ajoutée 5 heures plus tard et la suite de l'essai menée comme précédemment. Il n'a pas été relevé d'échauffement, voir la courbe inférieure de la figure 6.

Au vu de ce résultat, la Demanderesse a mené deux autres essais en incorporant pour l'un la même chaux à un prémélange eau, sable et carbonate de sodium et pour l'autre en incorporant un prémélange eau, sable et carbonate de sodium à la même chaux sans retard entre la fabrication du prémélange et l'incorporation voire les courbes supérieures de la figure 6. Il se produit alors un échauffement significatif dans les deux cas, d'environ 40°C. La notion de « même » chaux est ici une chaux de la même livraison d'un fabricant, ayant donc une granulométrie très proche, de calibre 0/3 mm, et des conditions de stockage identiques. La chaux provient de l'échantillon n°1 du tableau du chapitre 4. Une temporisation dans la préparation du mélange avec retard d'introduction de la chaux est intéressante pour éviter l'échauffement. Le lot de mélange sans échauffement a ensuite été chargé dans un four de verrerie. La proportion de volages a été comparable à celle d'un verre élaboré à partir de calcaire.

### 3) Essai d'enfournement

A partir d'une même composition de verre sodocalcique, la Demanderesse a cherché à comparer des granulométries de chaux différentes dans le même four. Les autres matières premières sont identiques d'un essai à l'autre. Une chaux de calibre 0/5 mm a fourni une production de verre de 23 tonnes/jour et une chaux de calibre 2/6 mm du même fournisseur a fourni une production de verre de 20,5 tonnes/jour. Lesdites chaux proviennent des échantillons n°4 et 6 du tableau du chapitre 4 respectivement. Une chaux fine fond plus vite dans le four qu'une chaux grossière mais contient plus d'air. L'air doit être évacué du verre en fusion par un dégazage plus long.

Par ailleurs, la Demanderesse préfère une chaux contenant le maximum de particules de granulométrie supérieure à 0,1 mm pour éviter les volages, inférieure à une valeur maximale comprise entre 4 et 6 mm pour une fusion rapide, et relativement étalée entre ces bornes pour réduire la quantité d'air enfournée et devant être dégazé du verre.

Dans le four verrier, le mélange a fondu plus rapidement qu'un mélange de granulométrie équivalente à base de calcaire, de composition menant à un verre sensiblement identique. Cette accélération se traduit par une augmentation de la production journalière d'un four de l'ordre 22%.

Dans des essais menés dans un même four de laboratoire en l'absence de dolomie, des échantillons de verre en fusion ont été prélevés à intervalles de 30 minutes dans le four. Deux lots de verre de même composition à base du même calcaire ont nécessité 2h30 et 3h de chauffe pour présenter une fusion correcte. Les prélèvements antérieurs à ces durées présentent des infondus et, après refroidissement, se brisent en poudre. Un lot de verre de même composition à base du même calcaire préalablement calciné à 1000°C avec une perte au feu de 43,5%, de granulométrie 0,1/2 mm et un lot de verre de même composition à base de chaux vive C. La chaux vive C comprend en masse : CaO 97,1%, MgO 1,8%, SiO₂ 0,5%, Al₂O₃ 0,2% et Fe₂O₃ 0,16 ppm. La chaux vive C présente une granulométrie de plus de 50 % ne passant pas le tamis de 3,15 mm ; 18% ne passant pas le tamis de 2 mm après passage au tamis de 3,15 mm ; 18% ne passant pas le tamis de 2 mm après passage au tamis de 3,15 mm ; moins de 5% ne passant pas le tamis de 1,6 mm après passage au tamis de 2 mm ; moins de 5% ne passant pas le tamis de 0,8 mm après passage au tamis de 1,6 mm ; moins de 5% ne passant pas le tamis de 0,5 mm après passage au tamis de 0,8 mm ; moins de 5% ne passant pas le tamis de 0,315 mm après passage au tamis de 0,5 mm ; moins de 5% ne passant pas le tamis de 0,2 mm après passage au tamis de 0,315 mm ; moins de 5% ne passant pas le tamis de 0,1 mm après passage au tamis de 0,2 mm ; moins de 10% ne passant pas le tamis de 0,08 mm après passage au tamis de 0,1 mm ; moins de 5% passant le tamis de 0,08 mm. Les deux derniers lots de verre ont fourni du verre de qualité convenable à partir de 2h de chauffe.

L'absence de dolomie est une simplification non susceptible de changer la constatation de la réduction de temps de fusion.

### 4) Mesure de granulométrie

| TAMIS mm | Chaux n°1 | Chaux n°2 | Chaux n°3 | Chaux n°4 | Chaux n°5 | Chaux n°6 | Chaux n°7 | Chaux n°8 |
|---|---|---|---|---|---|---|---|---|
| | %refus | %refus | %refus | %refus | %refus | %refus | %refus | %refus |
| 4,000 | 0 | 0 | 0 | 3,3 | 19,6 | 6,9 | 17,8 | 24,4 |
| 3,150 | 0 | 0 | 0,1 | 2,3 | 25,1 | 10,7 | 18,3 | 19,3 |
| 2,000 | 18,1 | 15,9 | 6,9 | 9,1 | 35,4 | 22,9 | 25,6 | 21,8 |
| 0,800 | 37,2 | 32,7 | 22,9 | 20,1 | 8,1 | 19,4 | 13, 6 | 11,3 |
| 0,500 | 10,9 | 10,5 | 11,5 | 8,8 | 1,2 | 5,5 | 3,2 | 2,6 |
| 0,400 | 3,9 | 3,5 | 4,5 | 3,5 | 0,3 | 1,9 | 1,1 | 1,0 |
| 0,200 | 9,7 | 19,8 | 15,7 | 10,5 | 0,9 | 5,3 | 3,1 | 3,0 |
| 0,100 | 8,3 | 13,5 | 27,9 | 23,3 | 1,0 | 7,9 | 10,9 | 8,8 |
| Reste | 20,8 | 4 | 9,9 | 18,5 | 8,2 | 19,3 | 6,2 | 7,6 |

| TAMIS mm | Chaux n°9 | Chaux n°10 | Chaux n°11 | Chaux n°12 | Chaux n°13 | Chaux n°14 | Chaux n°15 | Chaux n°16 |
|---|---|---|---|---|---|---|---|---|
| | %refus | %refus | %refus | %refus | %refus | %refus | %refus | %refus |
| 4,000 | 29,5 | 4,0 | 0,2 | 0,1 | 1,3 | 0,8 | 0,9 | 0,9 |
| 3,150 | 21,5 | 3,4 | 1,3 | 0,5 | 1,0 | 0,8 | 1,4 | 1,3 |
| 2,000 | 22,4 | 15,0 | 4,3 | 9,1 | 10,0 | 2,9 | 5,5 | 3,9 |
| 0, 800 | 15,2 | 32,8 | 13,1 | 26,7 | 29,8 | 12,7 | 15,3 | 14,6 |
| 0,500 | 2,6 | 12,9 | 8,2 | 14,6 | 14,9 | 9,7 | 10,1 | 9,8 |
| 0,400 | 0,7 | 4,2 | 3,6 | 5,5 | 4,4 | 3,9 | 3,6 | 3,9 |
| 0,200 | 1,8 | 10,1 | 12,2 | 16,9 | 13,0 | 13,2 | 14,2 | 11,8 |
| 0,100 | 4,2 | 13,8 | 34,9 | 12,6 | 13,6 | 24,8 | 31,7 | 40,8 |
| Reste | 2,1 | 3,6 | 220 | 14,0 | 11,9 | 30,5 | 17,2 | 11,8 |

Ces mesures de granulométrie montrent que ce paramètre est évolutif en fonction du conditionnement de la chaux - grands sacs, vrac, etc. -, de la manipulation et du déplacement de la chaux, et des conditions et durée de stockage. La granulométrie souhaitée comprend le plus possible de particules entre 0,1 mm et 4 mm, par exemple 90 % en masse ne passe pas au tamis de 0,1 mm et moins de 5 % en masse ne passe pas au tamis de 4 mm. Une granulométrie préférée est : plus de 95 % en masse ne passe pas au tamis de 0,1 mm et moins de 1 % en masse ne passe pas au tamis de 4 mm.

### 5) Quantité de volages

Le carneau d'un four industriel de verrerie a été muni d'une dérivation permettant de récupérer et peser une partie des volages. Le même dispositif de dérivation a été utilisé pendant la campagne d'essais. Les essais ont été menés avec en entrée les mêmes matières premières à l'exception du changement du calcaire vers le CaO et obtenant un verre de même composition en sortie et sur une durée de 24h. Une première série d'essais a été menée avec un mélange classique comprenant du calcaire et un four à boucle et à brûleur en voûte. Une deuxième série d'essais a été menée avec un mélange comprenant la chaux n°4 et le four à boucle et à brûleur en voûte. La composition du mélange est 1367 kg de sable, 112 kg de dolomie, 416 kg de carbonate de soude, 4 kg de sulfate de soude, 160 kg de chaux vive, 30 kg d'alumine. Les quantités de volages récupérées constituent des mesures relatives pour comparaison entre elles. Elles n'ont pas été ramenées à la tonne de verre produite. Ce sont des valeurs brutes en grammes :
Série n°1 : moyenne : 43,15 ; écart moyen : 14,65. Les poussières recueillies sont dues à deux effets : l'envol de particules et la vaporisation puis recondensation des espèces gazeuses sur le doigt froid qui a été placé dans le carneau pour recueillir les poussières. Ce deuxième effet a été identifié par la Demanderesse.
Série n°2 : moyenne : 45,2 ; écart moyen : 7,85. L'analyse faite pour la série n°1 s'applique. Le carneau n'a pas eu besoin d'être nettoyé pendant une campagne d'onze mois. Les poussières récupérées contiennent majoritairement du sulfate de sodium plus aisé à nettoyer que le sulfate de calcium habituellement retrouvé dans le carneau. On en déduit que la perte de Ca par volage est réduite.

En conclusion, la mesure de quantité de particules dans le carneau est difficile et une interprétation est nécessaire. Dans les conditions de l'essai, l'emploi de CaO issu de calcination du calcaire ne génère pas les mêmes volages de particules dans le four que l'utilisation de CaCO₃ avec le brûleur en voûte.

Après ses essais, la Demanderesse a mis au point la préparation d'un mélange précurseur de verre pour four verrier, dans lequel, en premier lieu, on mélange de l'eau, du sable et du carbonate de sodium dans des proportions massiques comprises entre 0 et 5 %, 40 et 65 %, et plus de 0 et au plus 25 % respectivement, et, en deuxième lieu, on ajoute de l'oxyde de calcium dans une proportion massique comprise entre 1 et 20 % du total. L'ajout de CaO est effectué au moins une heure après le premier mélange. Les matières sont à température ambiante. L'eau est absorbée par le carbonate de sodium et devient peu disponible pour le CaO.

L'eau permet une moindre sensibilité aux volages par effet de cohésion sur les particules fines.

Le mélange précurseur contient pour un verre sodocalcique : eau 0 à 3 %, sable 65 à 75 %, carbonate de sodium 10 à 15 %, chaux 10 à 25%, magnésie 0 à 6 %, affinants, colorants et décolorants 0 à 2 %.

Un verre borosilicate contient : 7 à 13 % de trioxyde de bore (B₂O₃), 4 à 8 % d'oxydes alcalins (Na₂O; K₂O), 2 à 7 % alumine (Al₂O₃), 0 à 5 % d'autres oxydes alcalins (CaO, MgO...). Un verre borosilicate contenant du CaO peut être fabriqué à partir d'un mélange précurseur selon l'invention.

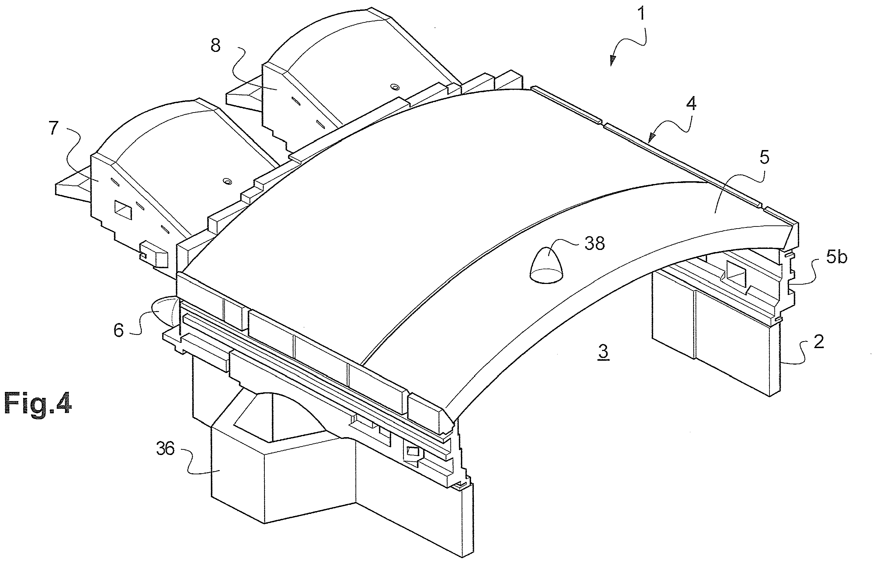

Le four de verrerie 1, illustré sur la figure 4, présente au moins un brûleur en boucle et au moins un brûleur en voûte. Le brûleur en boucle est orienté sensiblement horizontalement, à proximité d'une entrée de comburant. La flamme s'étend sensiblement horizontalement au-dessus du bain. Le bain est composé au début de chauffe des matières premières à fondre, c'est-à-dire du mélange précurseur de verre, puis du verre fondu en cours d'élaboration, transformé progressivement en verre industriel ayant la qualité souhaitée. Le brûleur envoûte est orienté sensiblement verticalement dans une paroi sommitale du four. La flamme s'étend sensiblement verticalement vers le bain.

Le four de verrerie 1 comprend une cuve 2 à verre fondu. Le four verrier 1 comprend une chambre de combustion 3 située au-dessus du bain de verre fondu et une paroi supérieure 4 composée d'une voûte 5a et de parties verticales dites pieds droits (longueur) ou pignons (largeur) 5b délimitant la chambre de combustion 3. Le four de verrerie 1 comprend au moins un brûleur 6 en boucle alimenté en fioul ou gaz. Le four de verrerie 1 comprend au moins un brûleur 38 en voûte alimenté en fioul ou gaz. Le four de verrerie 1 comprend une entrée de comburant 7. Le comburant peut être de l'air et/ou de l'oxygène.

Le brûleur 38 est installé dans la voûte 5a. Le brûleur 38 est à flamme dirigée vers la surface supérieure du bain, de haut en bas. Le brûleur 38 est positionné de façon que sa flamme soit située en dehors de la zone où le mouvement de gaz générée par le brûleur 6 est maximal. Le brûleur 38 est positionné sensiblement au sommet de la voûte 5a. Le brûleur 38 est positionné sensiblement au milieu du four 1 dans le sens de la largeur.

Dans l'un des piédroits, est ménagée une ouverture ou niche 36 permettant l'alimentation du four 1 en matières premières à fondre, notamment en mélange précurseur. Les organes de retrait du verre affiné n'ont pas été représentés.

La cuve 2 et la paroi supérieure 4 sont réalisées en matériaux réfractaires, renforcés par une structure métallique extérieure distante des zones de haute température. Le brûleur 6 est à flamme orientée horizontalement dans la chambre de combustion 3. Le brûleur 6 est installé sous l'entrée de comburant 7.

Le four de verrerie 1 comprend une sortie de fumées 8 ménagée dans un des parois 30 verticales 5b au-dessus du bain de verre fondu. Le brûleur 6 et la sortie de fumées 8 peuvent être prévus sur un même petit côté de manière que la flamme dudit brûleur 6 et les fumées effectuent un trajet en U dans la chambre de combustion 3. Le trajet en U est dit en boucle dans la terminologie habituelle. Le brûleur 6 et la sortie de fumées 8 peuvent être parallèles. Le brûleur 6 et la sortie de fumées 8 débouchent dans la chambre de combustion 3.

En aval de la sortie de fumées 8 dans le sens de déplacement des fumées, l'installation peut comprendre un carneau. Le carneau est un conduit de fumées sensiblement horizontal. Le carneau est en communication de fluide avec la chambre de combustion 3 par la sortie de fumées 8. Le carneau est réalisé en matériaux réfractaires renforcés par une structure métallique extérieure distante des zones de haute température. Le carneau est dépourvu de vanne. Le carneau conduit les fumées vers une cheminée ou un récupérateur de chaleur ou un régénérateur pour chauffer le comburant.

La mise en oeuvre combinée du brûleur 6 en boucle et du brûleur 38 en voûte offre un rendement élevé et un glaçage de la surface du bain. Le glaçage est une fusion rapide de la zone de surface du bain soumise à l'action de la flamme du brûleur 38 en voûte. La fusion rapide empêche la libération de poussières de ladite zone. Le glaçage est obtenu plus rapidement qu'en l'absence de brûleur 38 en voûte et de silicate de sodium vitreux granulaire.

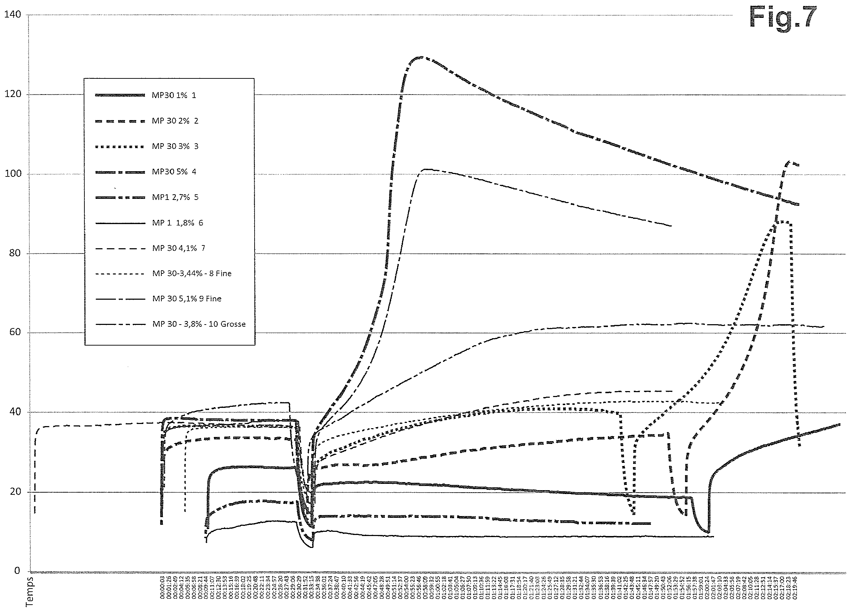

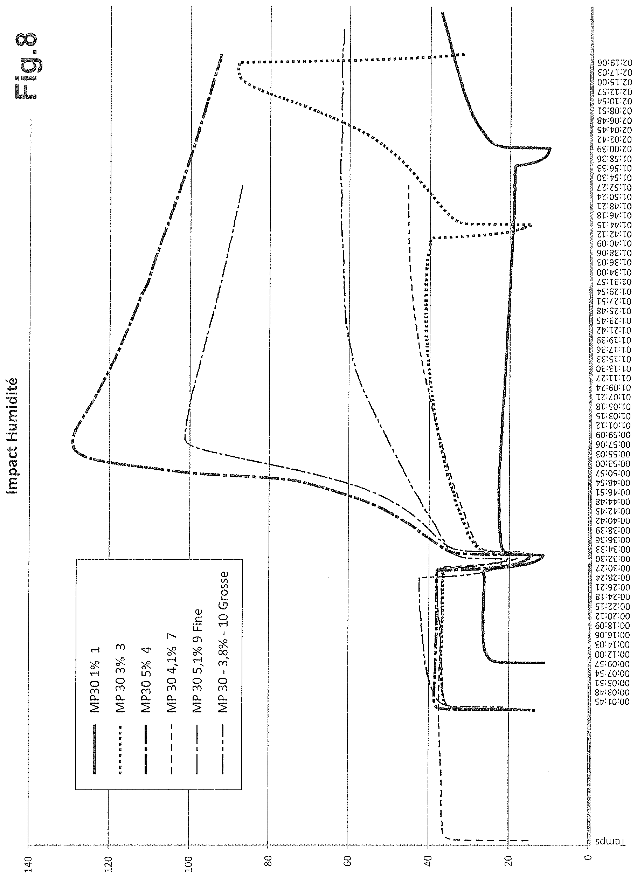

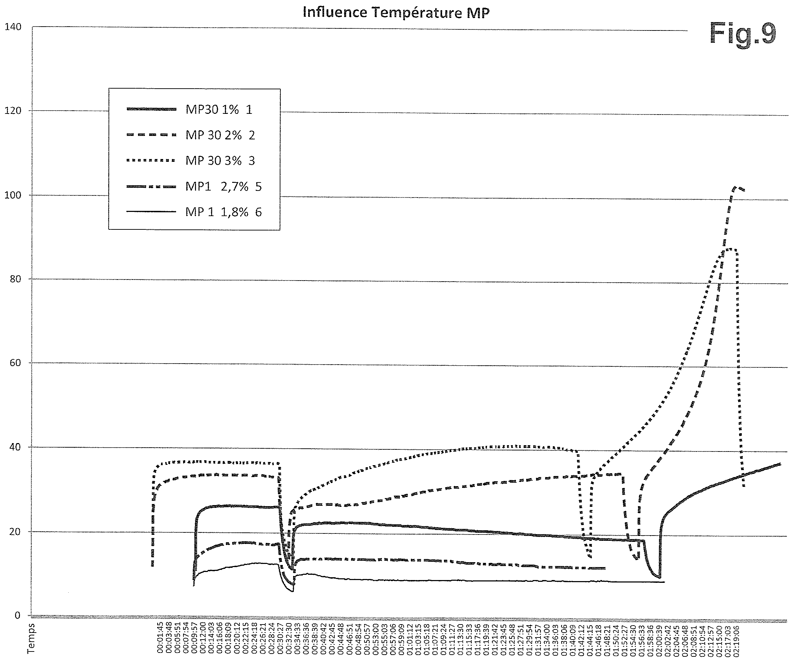

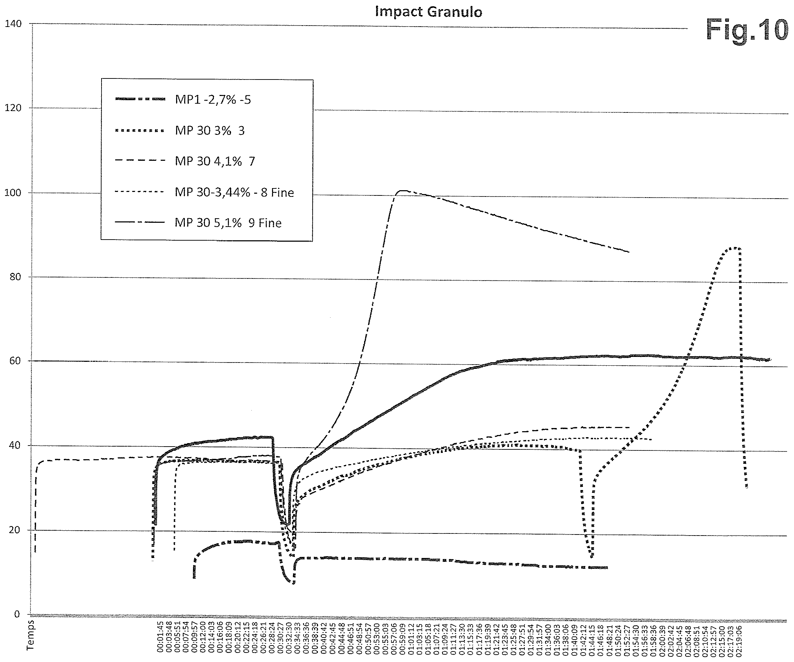

Par ailleurs, des essais relatifs à la durée du délai D entre le mélange (action de mélanger) de l'eau, du sable et du carbonate de sodium et l'ajout de l'oxyde de calcium (chaux vive) ont été menés en relation avec la température Tₘₚ des matières premières correspondant à la température ambiante moyenne de stockage et le taux d'humidité H du mélange sable/soude mesurée. De l'alumine, par exemple sous forme de feldspath, feldspathoïde et/ou alumine calcinée est également mélangée à l'eau, au sable et au carbonate de sodium. Ces essais sont reportés en figures 7 à 10. La température mesurée est en ordonnée et le temps en abscisse. Les courbes ont été calées en abscisse sur une référence commune à l'instant d'introduction de la chaux vive dans le mélangeur contenant au préalable un prémélange. Le délai D va de 20 min. pour les essais 1, 5 et 6 à 60 min. pour l'essai 7.

Ici, l'eau a été apportée à un sable sec et mélangée pendant 3 minutes. Puis du carbonate de sodium et de l'alumine ont été mélangés au sable humide pendant 2 minutes. La mesure du taux d'humidité H et de la température T du prémélange a été effectuée. L'eau présente avant l'introduction du carbonate de sodium et de l'alumine réagit avec le carbonate de sodium par une réaction d'hydratation du carbonate de sodium avec une élévation de température de quelques degrés. Le carbonate de sodium réagit avec ladite eau au moins dans les essais des courbes 1 à 3. Il reste de l'eau libre dans l'essai de la courbe 4 car l'ajout ultérieur d'oxyde de calcium provoque une forte et vive élévation de température. Il ne reste sensiblement pas d'eau libre dans les essais des courbes 1 à 3 car l'ajout ultérieur d'oxyde de calcium ne provoque pas d'élévation de température. De plus, un apport d'eau, à titre de vérification, plus d'une heure après l'ajout d'oxyde de calcium provoque une forte et vive élévation de température.

Plus tard, l'oxyde de calcium a été ajouté et mélangé. L'action de mélanger a été effectuée dans un mélangeur de type bétonnière de contenance 150 litres. A chaque essai les quantités mises en oeuvre sont de : 19 à 20 kg. La nature et l'origine des matières premières sont les mêmes pour les essais 1 à 10. Enfin, les essais 1 à 10 ont été effectués par la même personne suivant le même protocole, avec la même bétonnière à la même vitesse de rotation. La mise en oeuvre et la précision de mesure correspondent à des essais semi industriels plus proches de la réalité d'une campagne de production que d'un laboratoire de recherche fondamentale, un but étant d'identifier des phénomènes se produisant à l'échelle industrielle. Les masses mises en oeuvre sont de 13 kg de sable, 4 kg de carbonate de sodium, 2 kg d'oxyde de calcium, 0,24 kg d'alumine et de l'eau pour atteindre le pourcentage visé.

Le sable présente une composition : SiO₂ au moins 99%, Al₂O₃ moins de 1%, K₂O moins de 0,1%, TiO₂ moins de 0,03%, Fe₂O₃ moins de 0,015%. Les autres éléments sont à l'état de traces. Le sable présente une granulométrie D50 comprise entre 0,20 et 0,25 mm. Le sable présente une granulométrie avec au plus 3% de refus au tamis de 0,355 mm, et au plus 1% de passage au tamis de 0,125 mm.

Le carbonate de sodium présente une composition : Na₂CO₃ 99,75%, NaCl 0,03% et H₂O moins de 0,1%. Les autres éléments sont à l'état de traces. Le carbonate de sodium présente une granulométrie D50 comprise entre 0,15 et 0,25 mm. Le carbonate de sodium présente une granulométrie avec au plus 0,5% de refus au tamis de 0,600 mm, au moins 90% de refus au tamis de 0,150 mm et au plus 2% de passage au tamis de 0,075 mm.

L'oxyde de calcium présente une composition : CaO au moins 93%, MgO moins de 2%, CO₂ moins de 2%, Fe₂O₃ moins de 0,1%, S moins de 0,06%. Les autres éléments sont à l'état de traces. L'oxyde de calcium présente une granulométrie D50 comprise entre 0,08 et 0,12 mm. L'oxyde de calcium présente une granulométrie avec au plus 1,6% de refus au tamis de 5,00 mm, et au plus 55% de passage au tamis de 0,090 mm.

On mesure la température maximale Tₘₐₓ atteinte dans l'heure qui suit l'ajout d'oxyde de calcium. La mesure de température est effectuée en insérant une sonde de température dans le mélange contenu dans le mélangeur, le mélangeur ayant été arrêté. Le premier creux de température constaté sur toutes les courbes de la figure 7 correspond à l'étape de retrait de la sonde de température, ajout de l'oxyde de calcium, actionnement du mélangeur pendant 2 minutes, insertion à nouveau de la sonde de température. Le deuxième creux de température constaté sur les courbes 1, 2 et 3 correspond à une étape supplémentaire d'ajout d'eau en excès au-delà des quantités indiquées pour vérifier la présence d'oxyde de calcium plus d'une heure après l'introduction dudit oxyde de calcium. Cet ajout d'eau se traduit par une réaction exothermique d'hydratation de l'oxyde de calcium le transformant en hydroxyde de calcium. L'élévation de température constatée après ledit ajout d'eau en excès permet d'en déduire que l'oxyde de calcium restait présent au préalable dans le mélange.

De plus l'observation fine de l'ensemble des courbes avant l'ajout d'oxyde de calcium montre une élévation de température indiquant une réaction eau-carbonate de sodium. La température atteinte croît avec la proportion d'eau, notamment par comparaison entre les courbes 1, 2, 3, 7 et 4 d'une part et 6 et 5 d'autre part.

Avant l'ajout d'oxyde de calcium, un maximum de température est atteint, soit très rapidement pour la courbe 4 en environ 1 minute après la fin de l'action de mélanger, c'est à dire environ 3 minutes après la mise en contact du carbonate de sodium et de l'alumine avec le sable et l'eau, soit plus lentement pour les autres courbes en 10 minutes environ après la fin de l'action de mélanger. La baisse de température après le maximum indique que la réaction eau-carbonate de sodium a cessé. La fin de ladite réaction indique que soit toute l'eau disponible a été captée, soit que tout le carbonate de sodium disponible a été hydraté et il reste de l'eau libre. Ainsi la réaction rapide de la courbe 4 correspond à l'hydratation du carbonate de sodium avec excès d'eau.

Après l'ajout de l'oxyde de calcium, on mesure la température :
1) D=20 minutes Tₘₚ=30°C H=1%. Tₘₐₓ < Tₘₚ+15°C.
2) D=30 minutes Tₘₚ=30°C H=2%. Tₘₐₓ < Tₘₚ+15°C.
3) D=30 minutes Tₘₚ=30°C H=3%. Tₘₐₓ < Tₘₚ+15°C.
4) D=30 minutes Tₘₚ=30°C H=5%. Tₘₐₓ > 100°C.
5) D=20 minutes Tₘₚ=1°C H=2,7%. Tₘₐₓ < Tₘₚ+15°C.
6) D=20 minutes Tₘₚ=1°C H=1,8%. Tₘₐₓ < Tₘₚ+15°C.
7) D=60 minutes Tₘₚ=30°C H=4,1%. Tₘₐₓ < Tₘₚ+15°C.
8) D=25 minutes Tₘₚ=30°C H=3,44%. Tₘₐₓ < Tₘₚ+15°C.
9) D=30 minutes Tₘₚ=30°C H=5,1%. Tₘₐₓ > 100°C.
10) D=30 minutes Tₘₚ=30°C H=3,8%. Tₘₐₓ > 60°C.

Un échauffement inférieur à 10°C se produit au mélange (action de mélanger) eau-sable-carbonate de sodium dans les essais 2 à 4 et 7. Les essais 4, 9 et 10 sont insatisfaisants en raison d'un échauffement excessif à l'introduction de l'oxyde de calcium. La comparaison des essais 2 et 6 d'une part et 3 et 5 d'autre part montre que la température initiale des matières premières Tₘₚ a une influence faible à nulle sur la température maximale Tₘₐₓ. La comparaison des essais 2, 3 et 4 d'une part et 5 et 6 d'autre part montre que l'humidité a peu d'influence en dessous d'un seuil. Le seuil est situé entre plus de 4,1 et moins de 5% pour D=30 minutes. Toutefois, l'influence de la durée D est plafonnée par l'aptitude du carbonate de sodium à absorber de l'eau libre disponible. Toutefois, les essais montrent que la quantité d'eau doit être largement inférieure au seuil maximal théorique. Par ailleurs, la granulométrie du carbonate de sodium a une influence sur la durée D. Dans une certaine mesure, plus la granulométrie est fine, plus l'eau est absorbée rapidement mais risque d'initier une prise en masse. En cas de prise en masse, l'eau reste disponible pour la chaux vive, d'où un échauffement que l'on cherche à éviter.

En cas de granulométrie élevée du carbonate de sodium, la Demanderesse fait l'hypothèse que la réaction avec l'eau est limitée, ladite réaction se produisant en surface des grains de carbonate de sodium mais pas ou peu à l'intérieur desdits grains. La granulométrie du sable a peu d'influence en raison de l'aptitude quasi nulle du SiO₂ à s'hydrater.

L'essai n°2 a été effectué avec une bétonnière froide, environ 0°C, ce qui a ralenti la réaction d'hydratation du carbonate de sodium. L'essai n°2 n'est pas entièrement représentatif dans la partie de courbe antérieure à l'apport d'oxyde de calcium. De manière générale, un apport d'énergie peut être effectué sous la forme d'un chauffage de la bétonnière et/ou du mélange à température plus élevée que la température ambiante par exemple par brûleur à flamme, chauffage électrique, ou injection de vapeur d'eau dans le mélange, en restant à une température de mélange inférieure à 47°C.

Ainsi, les essais à 4,1% d'humidité dans le mélange antérieurement à l'ajout de chaux vive pour une durée D d'au moins une heure et à 3% d'humidité pour une durée D d'au moins 10 minutes avec une granulométrie courante de carbonate de sodium offrent des résultats satisfaisants. La faible influence de la durée D au-delà de 10 minutes en raison du maximum de température atteint avant 10 minutes, fait qu'un maximum de 4,1% d'humidité dans le mélange antérieurement à l'ajout de chaux vive pour une durée D de 10 minutes est intéressant et serait même robuste par rapport à des imprécisions de mesure ou aux tolérances industrielles. Une analyse de la partie gauche des courbes apporte des enseignements. Entre l'instant 0 et l'instant de retrait de la sonde en vue de l'apport de CaO - à 20 ; 30 ; 60 minutes selon les essais - l'évolution de la température reflète la réaction d'hydratation du carbonate de sodium au contact du sable humide. Entre ces instants, on identifie la plage temporelle où se situe le maximum local de température T_{Na}. Le maximum local de température T_{Na} indique que la réaction d'hydratation du carbonate de sodium est sensiblement terminée :
1) D=20 minutes Tₘₚ=30°C H=1%. T_{Na} 5 à 7 minutes.
2) D=30 minutes Tₘₚ=30°C H=2%. T_{Na} 13 à 15 minutes.
3) D=30 minutes Tₘₚ=30°C H=3%. T_{Na} 5 à 7 minutes.
4) D=30 minutes Tₘₚ=30°C H=5%. T_{Na} 1 à 2 minutes.
5) D=20 minutes Tₘₚ= 1°C H=2,7%. T_{Na} 11 à 13 minutes.
6) D=20 minutes Tₘₚ=1°C H=1,8%. T_{Na} environ 15 minutes.
7) D=60 minutes Tₘₚ=30°C H=4, 1 %. T_{Na} 17 à 19 minutes.
8) D=25 minutes Tₘₚ=30°C H=3,44%. T_{Na} 7 à 9 minutes.
9) D=30 minutes Tₘₚ=30°C H=5,1%. T_{Na} > 25 minutes.
10) D=30 minutes Tₘₚ=30°C H=3,8%. T_{Na} 25 à 27 minutes.

La température initiale Tₘₚ des matières premières a une influence sur la vitesse de réaction eau-carbonate de sodium. A Tₘₚ = 30°C la réaction est plus rapide qu'à Tₘₚ = 1°C par comparaison entre les essais 2 et 6 ; 3 et 5. La rapidité de la réaction lors de l'essai n°4 corrobore une présence d'eau en excès permettant une hydratation rapide du carbonate de sodium. La relative lenteur de la réaction lors de l'essai n°7 montre un équilibre eau-carbonate de sodium. La stabilité entre les essais n°1 et n°3 montre qu'une durée D d'environ 10 minutes est suffisante et robuste avec des matières premières à température initiale de 30°C ou plus. Une telle stabilité entre les essais n°1 et n°3, et entre les essais n°6 et n°5 montre que, avec carbonate de sodium en excès par rapport à l'eau, la vitesse de réaction est peu dépendante de la teneur en eau.

Par ailleurs, lors de l'ajout ultérieur d'eau en excès dans les essais 2 et 3 et lors de l'ajout d'oxyde de calcium de l'essai 4, la température a augmenté très rapidement et simultanément un fort dégagement de poussières s'est produit. La partie droite de la courbe de l'essai 1 à partir de 1:49:20 n'est pas représentative pour des raisons propres à l'essai 1. Ce type de réaction est typique de l'hydratation de la chaux vive, réaction fortement exothermique. On vérifie donc l'hydratation immédiate de la chaux vive ajoutée à un mélange à 5% d'eau et l'absence d'hydratation de la chaux vive ajoutée à un mélange à 2 ou 3% d'eau. En outre, les courbes de température des essais 3 et 7 à 3% et 4,1% d'eau respectivement présentent des formes très semblables avant et après l'ajout de chaux vive. Cette similarité forte indique que le mélange à 4,1% d'eau ne contient pas d'eau libre.

Les essais 8 et 9 ont été menés avec des fines de carbonate de sodium passant au tamis de 0,250 mm tandis que l'essai 10 a été mené avec des grosses particules de carbonate de sodium ne passant pas au tamis de 0,500 mm et passant au tamis de 1,000 mm. La provenance et le lot de carbonate de sodium sont les mêmes que pour les essais 1 à 7. Un tamisage a été effectué.

Les essais 8 et 10 ont été choisis avec une humidité laissant prévoir un résultat satisfaisant alors que l'essai 9 a été choisi avec une humidité forte pour tester l'influence éventuelle de la granulométrie sur l'humidité maximale. La courbe de l'essai 8 est proche de la courbe de l'essai 3. L'essai 8 est interprété comme produisant une consommation complète de l'eau libre par le carbonate de sodium en un temps assez bref inférieur à 10 minutes et une élévation de température inférieure à 15°C par rapport à la température Tₘₚ initiale. La granulométrie fine ne présente pas d'impact majeur au taux d'humidité 3,44%. L'essai 9 à humidité élevée fait état d'une réaction d'hydratation du carbonate de sodium beaucoup plus lente qu'à l'essai 4. Ceci s'explique par une prise en masse du mélange précurseur accompagnée de phénomènes de croûtage susceptibles de ralentir la réaction.

L'essai 10 à forte granulométrie et 3,8% d'humidité donne une courbe différente des autres essais dans l'étape d'hydratation du carbonate de sodium. La température monte pendant plus de 25 minutes ce qui indique une poursuite de la réaction d'hydratation du carbonate de sodium. Lors du retrait de la sonde de température en vue d'introduire l'oxyde de calcium, il subsiste une incertitude sur le point de savoir si le maximum de température a été atteint. La lenteur de l'hydratation du carbonate de sodium a pour cause la moindre surface active disponible du carbonate de sodium en raison de la forte dimension des particules de carbonate de sodium.

Lors de l'ajout d'oxyde de calcium, l'essai 8 présente une élévation de température comparable aux essais 3 et 7, donc satisfaisante. La présence d'eau disponible pour hydrater l'oxyde de calcium est très faible. L'essai 9 présente une élévation de température comparable à l'essai 4, donc trop élevée. La diminution de la granulométrie n'apporte pas l'effet intéressant à l'étape d'ajout d'oxyde de calcium et présente des risques de prise en masse. De tels risques peuvent être réduits en choisissant un taux d'humidité de 2% ou moins.

Lors de l'ajout d'oxyde de calcium, l'essai 10 présente une élévation de température d'environ 30 à 35°C au-dessus de la température Tₘₚ. Cette élévation mène à une température supérieure à 60°C en partant de Tₘₚ = 30°C. A 60°C, le risque de dégager des poussières irritantes est élevé. L'augmentation de la granulométrie apporte un risque d'échauffement excessif à l'ajout d'oxyde de calcium, en particulier si la température Tₘₚ est supérieure à 15°C. Un tel risque peut être réduit en choisissant un taux d'humidité de 3% ou moins.

Des essais 8 à 10, se déduit l'absence d'intérêt et certains inconvénients des granulométries exclusivement fines et exclusivement grossières. Il est donc préférable de prévoir une source de carbonate de sodium de granulométrie centrée entre 0,250 mm et 0,500 mm. Ceci peut inclure des fractions minoritaires de particules les unes inférieures à 0,250 mm et les autres supérieures 0,500 mm comme le montre les essais 1 à 7. Ainsi, une granulométrie de carbonate de sodium avec moins de 5% passant au tamis de 0,075 mm, moins de 15 % passant au tamis de 0,150 mm et moins de 5% ne passant pas au tamis de 0,600 mm convient.

En cas d'approvisionnement en carbonate de sodium à forte granulométrie, alors l'humidité sera limitée à 3%. L'hydratation du carbonate de sodium sera plus rapide que lors de l'essai 10 et la température après introduction de l'oxyde de calcium restera dans une plage de +0 à +15°C par rapport à la température ambiante.

Ces essais d'oxyde de calcium ont été menés avec du carbonate de sodium. Leurs enseignements sont applicables avec du carbonate de sodium et du silicate de sodium vitreux granulaire.

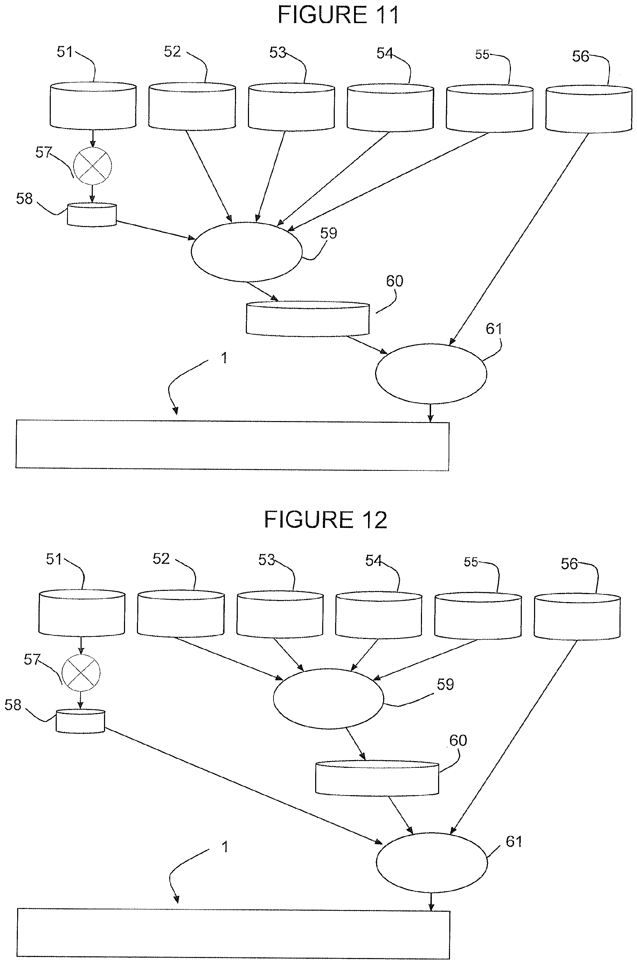

Sur la figure 11 est illustré un mode de réalisation dans lequel l'installation de verrerie industrielle comprenant le four 1 avec une cuve à verre fondu, et un système d'alimentation. Le silicate de sodium est stocké sous la forme de boulets ou de plaques. Un broyeur 57 de silicate de sodium est disposé en aval d'une première trémie de stockage 51. La première trémie de stockage 51 alimente le broyeur 57. Le broyage réalisé par le broyeur 57 produit des granulats de granulométrie comprise entre 0,1 et 30 mm. En sortie du broyeur 57, le silicate de sodium vitreux granulaire est stocké dans une deuxième trémie de stockage 58. La sortie de la deuxième trémie de stockage 58 est reliée à un premier mélangeur 59. Le premier mélangeur 59 est monté en sortie d'alimentations individuelles des autres matières premières sauf l'oxyde de calcium. Lesdites autres matières premières proviennent de trémies de stockage 52 à 55, par exemple pour le sable, le carbonate de sodium, le calcaire et l'alumine. La sortie du premier mélangeur 59 débouche dans une troisième trémie de stockage 60 suffisante pour au moins 10 minutes de production. La sortie de la troisième trémie de stockage 60 alimente un deuxième mélangeur 61. Le deuxième mélangeur 61 reçoit l'oxyde de calcium par une sortie d'une quatrième trémie de stockage 56 distincte de la sortie de la troisième trémie de stockage 60. Le deuxième mélangeur 61 peut être formé par une pluralité de bandes transporteuses. Le mouvement des matières premières sur les bandes transporteuses en fonctionnement et en fin de bandes transporteuses assure un mélange satisfaisant. Une alimentation en eau du premier mélangeur 59 est optionnelle selon l'humidité des matières premières à y mélanger.

Le mode de réalisation de la figure 12 est voisin du précédent à ceci près que la sortie de la deuxième trémie de stockage 58 est reliée au deuxième mélangeur 61. Le premier mélangeur 59 est monté en sortie d'alimentations individuelles des matières premières autres que l'oxyde de calcium et le silicate de sodium vitreux granulaire.

En variante, la sortie du broyeur 57, est reliée au premier mélangeur 59. Il n'y a alors pas de trémie intermédiaire 58.

Ainsi, l'invention propose un procédé de fabrication de verre comprenant l'apport dans un four de verrerie d'un mélange de matières premières à l'état solide, lesdites matières premières comprenant du silicate de sodium vitreux granulaire et présentant un taux d'humidité inférieur à 1% en masse et de l'oxyde de calcium pulvérulent, sans apport volontaire de carbonate de calcium. Le silicate de sodium vitreux granulaire peut couvrir de plus de 0 à 100% des apports en Na₂O.

Dans un autre mode, le procédé de fabrication de verre comprend l'apport dans un four de verrerie d'un mélange de matières premières à l'état solide, lesdites matières premières comprenant du silicate de sodium vitreux granulaire et présentant un taux d'humidité inférieur à 1% en masse, de dolomie et de l'oxyde de calcium pulvérulent, sans autre apport volontaire de carbonate de calcium.

L'invention propose un procédé de fabrication de verre comprenant l'apport dans un four de verrerie d'un mélange de matières premières à l'état solide, lesdites matières premières comprenant du silicate de sodium vitreux granulaire et présentant un taux d'humidité inférieur à 1% en masse et de l'oxyde de calcium pulvérulent, sans apport volontaire de carbonate de magnésium. Le silicate de sodium vitreux granulaire peut couvrir de plus de 0 à 100% des apports en Na₂O.

L'invention propose un procédé de fabrication de verre comprenant l'apport dans un four de verrerie d'un mélange de matières premières à l'état solide, lesdites matières premières comprenant de l'oxyde de calcium pulvérulent apportant de plus de 0 à moins de 100% du CaO présent dans le verre et pouvant comprendre du silicate de sodium vitreux granulaire présentant un taux d'humidité inférieur à 1% en masse. Le silicate de sodium vitreux granulaire peut couvrir de 0 à 100% des apports en Na₂O. Le complément de calcium peut être apporté par calcaire, dolomie, etc.

Dans un essai de production industrielle stabilisée sur plusieurs jours, dans un four de verrerie, le calcaire étant remplacé à 100% par de l'oxyde de calcium, la substitution partielle du carbonate de sodium par du silicate de sodium à hauteur de 20% du sodium apporté a permis une augmentation de 15% de la production journalière du four sans que ladite production ait été poussée au maximum, ce par rapport à une production antérieure à 0% du sodium apporté par du silicate de sodium et 0% du calcium apporté par du calcaire. Ceci correspond à une augmentation de plus de 40% de la production journalière du four sans que ladite production ait été poussée au maximum, ce par rapport à une production antérieure à 0% du sodium apporté par du silicate de sodium et 0% du calcium apporté par de l'oxyde de calcium. Les autres matières premières sont restées les mêmes qu'auparavant. Le verre sodocalcique produit a été de qualité semblable à celle de la production antérieure et a été intégré au processus aval de production.

Dans un autre four de verrerie, un essai de production industrielle stabilisée sur plusieurs jours, le calcaire étant remplacé à hauteur de 20% puis 40% par de l'oxyde de calcium, la consommation d'énergie par tonne de verre a baissé de 2,3% puis de 5%. Les autres matières premières sont restées les mêmes qu'auparavant. Le verre sodocalcique produit a été de qualité semblable à celle de la production antérieure et a été intégré au processus aval de production.

Dans un autre four de verrerie, un essai de production industrielle stabilisée sur plusieurs jours, le carbonate de sodium étant remplacé à hauteur de 10% puis 20% par du silicate de sodium, la consommation d'énergie par tonne de verre a baissé de plus de 3% puis de plus de 4%. Les autres matières premières sont restées les mêmes qu'auparavant avec apport de calcaire. Le verre sodocalcique produit a été de qualité semblable à celle de la production antérieure et a été intégré au processus aval de production.

Dans un autre four de verrerie à chauffage électrique, un essai de production industrielle stabilisée sur plusieurs jours de verre fluosilicate, le sodium est apporté entre 10 et 100% sous forme de silicate de sodium. Les autres matières premières sont restées les mêmes qu'auparavant, y compris un apport de calcium sous forme de calcaire. La teneur massique en CaO du verre fluosilicate est comprise entre 1 et 3%. La consommation d'énergie rapportée à la tonne produite a baissé et la température mesurée dans le four a baissé de plus de 10°C, en moyenne d'environ 25°C pour le cas du sodium apporté à 100% sous forme de silicate de sodium. Le verre fluosilicate produit a été de qualité semblable à celle de la production antérieure et a été intégré au processus aval de production.

Dans un autre four de verrerie à chauffage électrique, dès 10% d'apport de sodium sous forme de silicate de sodium et substitution à 100% du calcaire par de l'oxyde de calcium, à production constante de verre de qualité commerciale, on remarque une diminution de l'usure du four et une baisse de la température en sortie du four. La durée de vie d'un four avec 5, 10, 15 ou 20 % de Na₂O fourni sous forme de silicate de sodium est prolongée de plusieurs mois pour des durées de vie de l'ordre de 20 à 36 mois. La valeur préférée est de 4 à 20%. En d'autres termes, l'usure des réfractaires baisse d'environ 11%. Il en résulte un tonnage total de verre produit entre deux réfections du four nettement accru. L'affinage est amélioré ce qui se traduit par une meilleure qualité du verre. La fusion des matières premières est plus rapide. Ces résultats sont vérifiés aussi bien sur un four en fin de vie, que sur un four en milieu de vie ou en début de vie. La consommation d'énergie par tonne produite a moins augmenté que tout au long de la campagne de production antérieure. Il y a donc une évolution plus lente de la consommation d'énergie qui tend à augmenter du début à la fin d'une campagne de production entre deux réfections du four. A temps écoulé égal depuis le début de la campagne de production, la consommation d'énergie a même baissé de 4% entre la campagne de production antérieure et la campagne de production considérée.

L'apport de calcium sous forme d'oxyde de calcium avec du sodium apporté à 100% sous forme de carbonate de sodium offre une baisse de consommation d'énergie dans une mesure encore accrue avec l'apport de silicate de sodium.

Par ailleurs, l'usure du four est diminuée ce qui s'avère très intéressant pour la production de verre fluosilicate. L'effet de l'apport d'oxyde de calcium est visible et favorable nonobstant la faible teneur massique en CaO d'un verre fluosilicate.

## Revendications

1. Procédé de fabrication de verre comprenant l'apport dans un four de verrerie de matières premières à l'état solide, lesdites matières premières comprenant du silicate de sodium vitreux granulaire et présentant un taux d'humidité inférieur à 1%, préférablement de 0%, en masse et de l'oxyde de calcium pulvérulent.

2. Procédé selon la revendication 1, dans lequel ledit silicate de sodium vitreux granulaire présente une granulométrie comprise entre 0,1 et 30 mm et est à la température ambiante.

3. Procédé selon la revendication 1 ou 2, comprenant une étape préalable de stockage dudit silicate de sodium, ledit silicate de sodium stocké étant sous la forme de boulets ou de plaques, et une étape de broyage pour l'obtention de ladite granulométrie comprise entre 0,1 et 30 mm.

4. Procédé selon l'une des revendications précédentes, dans lequel le silicate de sodium vitreux granulaire présente un ratio molaire compris entre 2,5 et 5 SiO₂ pour 1 Na₂O, préférablement entre 2,5 et 3,5.

5. Procédé selon l'une des revendications précédentes, dans lequel au moins 17% en masse, préférablement au moins 80%, plus préférablement au moins 99%, du calcium est apporté par l'oxyde de calcium pulvérulent pour un verre sodocalcique, tandis qu'au moins 80% en masse, préférablement au moins 99%, du calcium est apporté par l'oxyde de calcium pulvérulent pour un verre fluosilicate.

6. Procédé selon l'une des revendications précédentes, dans lequel le sodium est apporté à plus de 1% sous forme de silicate de sodium vitreux granulaire pour un verre sodocalcique ou un verre fluosilicate, de préférence entre 4 et 25%, plus préférablement entre 5 et 20%, voire entre 10 et 15%.

7. Procédé selon l'une des revendications précédentes, dans lequel le silicate de sodium vitreux granulaire est mélangé aux autres matières premières comprenant notamment au moins un parmi sodium, calcium, magnésium, bore, potassium, silicium, aluminium et fluor.

8. Procédé selon l'une des revendications précédentes, dans lequel lesdites matières premières sont mélangées avant enfournement, l'oxyde de calcium étant apporté après les autres matières, et le mélange est dépourvu de fraction à l'état liquide.

9. Procédé selon l'une des revendications précédentes, dans lequel ledit silicate de sodium vitreux granulaire apporte entre 2 et 50% du sodium du verre, préférablement 4 et 15% pour un verre sodo-calcique, le reste étant apporté sous forme de carbonate de sodium, de sulfate de sodium, de groisil et de feldspath et ledit oxyde de calcium apporte entre 1 et 100% du calcium du verre, le reste étant apporté sous forme de carbonate de calcium, de groisil, de dolomie et de feldspath.

10. Procédé selon l'une des revendications précédentes, dans lequel lesdites matières premières comprennent du sable siliceux, du carbonate de sodium, et du groisil pour obtenir un verre à Na₂O compris entre 10 et 20% en masse du total, ou du sable siliceux, du groisil, du fluosilicate de sodium et du feldspath.

11. Procédé selon l'une des revendications précédentes, dans lequel le chauffage du four est assuré à plus de 50% par un brûleur à flamme sensiblement horizontale et/ou au moins un brûleur latéral, le complément étant apporté par des électrodes.

12. Procédé selon l'une des revendications précédentes, dans lequel 4% à 30%, préférablement 10% à 20%, du sodium est apporté sous la forme de silicate de sodium vitreux granulaire, avec 100% du calcium apporté sous la forme de carbonate de calcium et de dolomie au lieu de l'oxyde de calcium.

13. Procédé selon la revendication 12, dans lequel, dans un four avec un brûleur aérogaz à boucle et un brûleur oxygaz en voûte, 10% du sodium est apporté sous la forme de silicate de sodium vitreux granulaire, avec 100% du calcium apporté sous la forme de carbonate de calcium et de dolomie au lieu de l'oxyde de calcium.

14. Installation de verrerie industrielle pour la mise en oeuvre du procédé selon l'une des revendications précédentes, comprenant un four comprenant une cuve à verre fondu, et un système d'alimentation en matières premières pourvu d'un organe d'alimentation en silicate de sodium vitreux granulaire, l'organe d'alimentation en silicate de sodium vitreux granulaire comprenant un broyeur de silicate de sodium avec une sortie reliée à une entrée du four par l'intermédiaire d'un stockage tampon, et un stockage de silicate de sodium sous la forme de boulets ou de plaques relié à une entrée du broyeur.

15. Installation de verrerie selon la revendication 14, comprenant au moins un carneau d'évacuation des gaz de combustion provenant du four, le carneau débouchant dans un four de cuisson de matières premières verrières.

## Patentansprüche

1. Verfahren zur Herstellung von Glas, umfassend die Zuführung in einen Glasofen von Rohstoffen in festem Zustand, wobei die Rohstoffe körniges glasiges Natriumsilikat umfassen und einen Feuchtigkeitsgehalt von weniger als 1 %, vorzugsweise von 0 Massen-%, aufweisen, und von pulverförmigem Calciumoxid.

2. Verfahren nach Anspruch 1, wobei das körnige glasige Natriumsilikat eine Korngröße zwischen 0,1 und 3 mm umfasst und Raumtemperatur aufweist.

3. Verfahren nach Anspruch 1 oder 2, umfassend einen vorhergehenden Schritt der Lagerung des Natriumsilikats, wobei das gelagerte Natriumsilikat die Form von Kugeln oder Platten aufweist, und einen Schritt des Zermahlens, um die Korngröße zwischen 0,1 und 30 mm zu erreichen.

4. Verfahren nach einem der vorhergehenden Ansprüche, wobei das körnige glasige Natriumsilikat ein Molarverhältnis zwischen 2,5 und 5 SiO₂, vorzugsweise zwischen 2,5 und 3,5 für 1 Na₂O aufweist.

5. Verfahren nach einem der vorhergehenden Ansprüche, wobei mindestens 17 Massen-%, vorzugsweise mindestens 80 %, noch bevorzugter mindestens 99 % des Calciums durch pulverförmiges Calciumoxid für ein Natronkalkglas bereitgestellt wird, während mindestens Massen-80 %, vorzugsweise mindestens 99 % des Calciums durch pulverförmiges Calciumoxid für ein Fluorsilikatglas bereitgestellt wird.

6. Verfahren nach einem der vorhergehenden Ansprüche, wobei das Natrium zu mehr als 1 % in Form von körnigem glasigem Natriumsilikat für ein Natronkalkglas oder ein Fluorsilikatglas bereitgestellt wird, vorzugsweise zwischen 4 und 25 %, noch bevorzugter zwischen 5 und 20 %, sogar zwischen 10 und 15 %.

7. Verfahren nach einem der vorhergehenden Ansprüche, wobei das körnige glasige Natriumsilikat mit den anderen Rohstoffen vermischt wird, die insbesondere mindestens eines von Natrium, Calcium, Magnesium, Bor, Kalium, Silicium, Aluminium und Fluor umfassen.

8. Verfahren nach einem der vorhergehenden Ansprüche, wobei die Rohstoffe vor dem Beschicken vermischt werden, wobei das Calciumoxid nach den anderen Stoffen zugeführt wird und die Mischung keine Fraktion im flüssigen Zustand aufweist.

9. Verfahren nach einem der vorhergehenden Ansprüche, wobei das körnige glasige Natriumsilikat zwischen 2 und 50 % des Glasnatriums, vorzugsweise 4 und 15 % für ein Natron-Kalkglas bereitstellt, wobei der Rest in Form von Natriumcarbonat, Natriumsulfat, Glasschrott und Feldspat bereitgestellt wird und das Calciumoxid zwischen 1 und 100 % des Glaskalks bereitstellt, wobei der Rest in Form von Calciumcarbonat, Glasschrott, Dolomit und Feldspat bereitgestellt wird.

10. Verfahren nach einem der vorhergehenden Ansprüche, wobei die Rohstoffe Quarzsand, Natriumkarbonat und Glasschrott umfassen, um ein Glas mit einem Na₂O-Gehalt zwischen 10 und 20 Massen-% der Gesamtmenge zu erhalten, oder Quarzsand, Glasschrott, Natrium-Fluosilikat und Feldspat.

11. Verfahren nach einem der vorhergehenden Ansprüche, wobei das Erhitzen des Ofens zu mehr als 50 % durch einen Brenner mit im Wesentlichen horizontaler Flamme und/oder mindestens einen Seitenbrenner erfolgt, wobei der Zusatz durch Elektroden bereitgestellt wird.

12. Verfahren nach einem der vorhergehenden Ansprüche, wobei 4 % bis 30 %, vorzugsweise 10 % bis 20 % des Natriums in Form von körnigem glasigem Natriumsilikat bereitgestellt werden, wobei 100 % des Calciums in Form von Calciumkarbonat und Dolomit statt Calciumoxid bereitgestellt wird.

13. Verfahren nach Anspruch 12, wobei in einem Ofen mit einem Aerogasbrenner mit Schleife und einem Oxygasbrenner in Gewölbeform 10 % des Natriums in Form von körnigem glasigem Natriumsilikat bereitgestellt wird, wobei 100 % des Calciums in Form von Calciumkarbonat und Dolomit statt Calciumoxid bereitgestellt wird.

14. Industrielle Glasanlage zur Durchführung des Verfahrens nach einem der vorhergehenden Ansprüche, umfassend einen Ofen, der eine Wanne für geschmolzenes Glas umfasst, und ein System für die Zufuhr von Rohstoffen, das mit einem Organ zur Zufuhr von körnigem glasigem Natriumsilikat versehen ist, wobei das Organ zur Zufuhr von körnigem glasigem Natriumsilikat eine Natriumsilikat-Mühle mit einem Auslass, der über einen Pufferspeicher mit einem Einlass des Ofens verbunden ist, und einen Speicher für Natriumsilikat in Form von Kugeln oder Platten umfasst, der mit einem Einlass der Mühle verbunden ist.

15. Glasanlage nach Anspruch 14, umfassend mindestens einen Abzug für die Abführung von aus dem Ofen kommenden Verbrennungsgasen, wobei der Abzug in einen Ofen zum Brennen von Glasrohstoffen mündet.

## Claims

1. Method for manufacturing glass comprising the supply into a glass-making furnace of raw materials in the solid state, said raw materials comprising granular glassy sodium silicate and having a moisture content of less than 1%, preferably of 0%, by weight, and of powdery calcium oxide.

2. Method according to claim 1, wherein said granular glassy sodium silicate has a particle size between 0.1 and 30mm and is at ambient temperature.

3. Method according to claim 1 or 2, comprising a previous step of storing said sodium silicate, said stored sodium silicate being in the form of balls or of plates, and a step of grinding to obtain said particle size between 0.1 and 30mm.

4. Method according to one of the previous claims, wherein the granular glassy sodium silicate has a molar ratio of between 2.5 and 5 SiO₂ for 1 Na₂O, preferably between 2.5 and 3.5.

5. Method according to one of the previous claims, wherein at least 17% by weight, preferably at least 80%, more preferably at least 99%, of the calcium is supplied by the powdery calcium oxide for soda-lime glass, while at least 80% by weight, preferably at least 99%, of the calcium is supplied by the powdery calcium oxide for fluosilicate glass.

6. Method according to one of the previous claims, wherein the sodium is supplied at more than 1% in the form of granular glassy sodium silicate for soda-lime glass or fluosilicate glass, preferably between 4 and 25%, more preferably between 5 and 20%, or even between 10 and 15%.

7. Method according to one of the previous claims, wherein the granular glassy sodium silicate is mixed with the other raw materials comprising in particular at least one out of sodium, calcium, magnesium, boron, potassium, silicon, aluminium and fluorine.

8. Method according to one of the previous claims, wherein said raw materials are mixed before charging, the calcium oxide being supplied after the other materials, and the mixture does not have a fraction in the liquid state.

9. Method according to one of the previous claims, wherein said granular glassy sodium silicate supplies between 2 and 50% of the sodium of the glass, preferably 4 and 15%, for soda-lime glass, the rest being supplied in the form of sodium carbonate, sodium sulphate, cullet and feldspar and said calcium oxide supplies between 1 and 100% of the calcium of the glass, the rest being supplied in the form of calcium carbonate, cullet, dolomite and feldspar.

10. Method according to one of the previous claims, wherein said raw materials comprise silica sand, sodium carbonate, and cullet to obtain a glass with Na₂O between 10 and 20% by weight of the total, or silica sand, cullet, sodium fluosilicate and feldspar.

11. Method according to one of the previous claims, wherein the heating of the furnace is carried out at more than 50% by a burner with a substantially horizontal flame and/or at least one lateral burner, the rest being supplied by electrodes.

12. Method according to one of the previous claims, wherein 4% to 30%, preferably 10% to 20%, of the sodium is supplied in the form of granular glassy sodium silicate, with 100% of the calcium supplied in the form of calcium carbonate and dolomite instead of the calcium oxide.

13. Method according to claim 12, wherein, in a furnace with a loop gas-air burner and a crown gas-oxygen burner, 10% of the sodium is supplied in the form of granular glassy sodium silicate, with 100% of the calcium supplied in the form of calcium carbonate and dolomite instead of the calcium oxide.

14. Industrial glass-making facility for implementing the method according to one of the previous claims, comprising a furnace comprising a tank for melted glass, and a system for supplying raw materials provided with a member for supplying granular glassy sodium silicate, the member for supplying granular glassy sodium silicate comprising a sodium silicate grinder with an output connected to an input of the furnace via a buffer storage, and a storage of sodium silicate in the form of balls or plates, connected to an input of the grinder.

15. Glass-making facility according to claim 14, comprising at least one flue for evacuating the combustion gases coming from the furnace, the flue opening into a furnace for firing glass-making raw materials.
